# EUROPÄISCHE PATENTSCHRIFT

(11) **EP 3 707 854 B1**
(45) Veröffentlichungstag und Bekanntmachung des Hinweises auf die Patenterteilung: **24.08.2022**
(21) Anmeldenummer: 18796942.3
(22) Anmeldetag: 05.11.2018
(51) Int. Cl.: H04L 9/32, G06F 21/64

(54) **VERFAHREN ZUM VERKNUEPFEN EINES ERSTEN DATENBLOCKS MIT EINEM ZWEITEN DATENBLOCK, VERFAHREN ZUM UEBERPRUEFEN DER INTEGRITAET EINER BLOCKCHAIN-STRUKTUR, VORRICHTUNG UND COMPUTERPROGRAMMPRODUKT**
METHOD FOR LINKING A FIRST DATA BLOCK TO A SECOND DATA BLOCK, METHOD FOR CHECKING THE INTEGRITY OF A BLOCKCHAIN STRUCTURE, DEVICE AND COMPUTER PROGRAM PRODUCT
PROCÉDÉ D'INTERCONNEXION D'UN PREMIER BLOC DE DONNÉES À UN DEUXIÈME BLOC DE DONNÉES, PROCÉDÉ DE VÉRIFICATION DE L'INTÉGRITÉ D'UNE STRUCTURE DE CHAÎNE DE BLOCS, DISPOSITIF ET PRODUIT PROGRAMME INFORMATIQUE

(30) Priorität: 10.11.2017 DE 102017126349
(43) Veröffentlichungstag der Anmeldung: 16.09.2020
(73) Patentinhaber: Bundesdruckerei GmbH, 10969 Berlin (DE)
(72) Erfinder: WILKE, Andreas, 13509 Berlin (DE); FABIAN, David, 13465 Berlin (DE); KOMAROV, Ilya, 13507 Berlin (DE)
(74) Vertreter: Patentship Patentanwaltsgesellschaft mbH
(86) Internationale Anmeldenummer: PCT/EP2018/080131
(87) Internationale Veröffentlichungsnummer: WO 2019/091901

(56) Entgegenhaltungen:
- WO-A1-2018/177662
- US-A1- 2013 101 118
- US-A1- 2016 028 552
- US-B1- 9 774 578
- Mohammed Rangwala ET AL: "A Mutual Agreement Signature Scheme for Secure Data Provenance", , 31. Dezember 2014 (2014-12-31), XP055476791, ISBN: 978-1-4799-3572-7 Gefunden im Internet: URL:https://www.science.iupui.edu/~xkzou/P apers/ICCCN14_Digital_Provenance.pdf [gefunden am 2018-05-18]

## Beschreibung

Die Erfindung betrifft ein Verfahren zum Verknüpfen eines ersten Datenblocks mit einem zweiten Datenblock, um eine Blockchain-Struktur zu erhalten, zwei Verfahren zum Überprüfen der Integrität einer Blockchain-Struktur, welche einen ersten Datenblock mit einem zweiten Datenblock verknüpft, eine Vorrichtung zum Verknüpfen eines ersten Datenblocks mit einem zweiten Datenblock, um eine Blockchain-Struktur erhalten, und ein Computerprogrammprodukt.

Die Patentschrift US 9 774 578 B1 offenbart eine Blockchain umfassend einen ersten Datenblock und einen zweiten Datenblock.

Die Offenlegungsschrift US 2016/028552 A1 offenbart eine Blockchain, wobei ein Datenblock der Blockchain einen Hashwert eines vorherigen Datenblocks aufweist.

Der Artikel "Mohammed Rangwala ET AL: "A Mutual Agreement Signature Scheme for Secure Data Provenance", 31. Dezember 2014 (2014-12-31), XP055476791, ISBN: 978-1-4799-3572-7, gefunden im Internet:
URL:https://www.science.iupui.edu/~xkzou/Papers/ICCCN14_Digital_Provenance.pdf [gefunden am 2018-05-18]" offenbart ein Konzept zum Signieren von Daten, um Manipulationen hinsichtlich des Absenders der Daten zu vermeiden bzw. erkennen zu können.

Die Offenlegungsschrift US 2013/101118 A1 offenbart ein Verfahren und eine Vorrichtung zum Bereitstellen eines Broadcast Services unter Verwendung von Verschlüsselungsschlüsseln in einem Kommunikationssystem.

Die Speicherung von Daten soll in der Regel manipulationssicher sein. Das heißt, dass gespeicherte Daten nicht unbemerkt von unberechtigten Dritten veränderbar sein sollen. Hierzu können Daten in Datenblöcken gespeichert werden, die miteinander verknüpft werden. Durch eine solche Verknüpfung kann eine sogenannte Blockchain erstellt werden. Eine solche Blockchain umfasst Datenblöcke mit zu speichernden Daten und Sicherheitsmerkmalen, wobei die Datenblöcke untereinander verkettet sind, so dass eine Manipulation eines einzelnen Datenblocks in Folgeblöcken auffällt.

Hierfür können Überprüfungswerte, beispielsweise durch ein Hash-Verfahren, in den Folgeblöcken hinterlegt werden. Wird ein Block innerhalb der Blockchain manipuliert, so unterscheiden sich dann die Überprüfungswerte in den folgenden Datenblöcken von den bisher gespeicherten Datenblöcken.

Bei einer derartigen Blockchain kann es zu Gabelungen kommen, wobei typischerweise der Hauptpfad durch einen Mehrheitsentscheid der Nutzer der Blockchain definiert wird. Die anderen Gabelungen der Blockchain bleiben jedoch bestehen. Dies kann zu einer Unsicherheit in den Daten führen.

Dadurch, dass die Überprüfungswerte in die folgenden Datenblöcke geschrieben werden, fällt zwar auf, wenn ein vorheriger Datenblock manipuliert wurde, jedoch ist es denkbar, dass der letzte Datenblock der so erzeugten Blockchain entfernt oder manipuliert werden kann. Überprüfungswerte werden in folgende Blöcke gespeichert. Da es zu diesem letzten Block noch keinen Folgeblock gibt, gibt es auch keine Überprüfungswerte. Somit fällt eine derartige Manipulation nicht auf.

Des Weiteren kann ein Datenblock in der Blockchain, beispielsweise der vorletzte Datenblock, unbemerkt verändert werden, wenn nach der Veränderung dieses Datenblocks die folgenden Datenblöcke angepasst werden. Dies kann beispielsweise bei dem vorletzten Datenblock ohne viel Aufwand erfolgen, da lediglich ein Folgeblock existiert, der verändert werden muss.

Derart manipulierte Strukturen können durch externe Abstimmungsprozesse entdeckt werden. Beispielsweise führen Nutzer der Blockchain ein Abstimmungsverfahren durch, ob die Datensätze valide sind und welchen Datensätzen getraut werden kann.

Eine Aufgabe der Erfindung ist, ein verbessertes Konzept für eine Blockchain-Struktur bereitzustellen.

Die Aufgabe wird durch die Merkmale der unabhängigen Ansprüche gelöst. Des Weiteren sind Ausführungsbeispiele in den abhängigen Ansprüchen, der Beschreibung sowie den Figuren beschrieben.

Die Aufgabe der Erfindung wird gemäß einem ersten Aspekt durch ein Verfahren zum Verknüpfen eines ersten Datenblocks mit einem zweiten Datenblock gelöst, wobei durch das Verfahren eine Block-Chain-Struktur erhalten werden kann. Der erste Datenblock weist erste Daten auf, welchen eine erste Datenverarbeitungsvorschrift zugeordnet ist. Der zweite Datenblock weist zweite Daten auf. Das Verfahren umfasst die folgenden Schritte:
- Zuordnen einer zweiten Datenverarbeitungsvorschrift zu dem zweiten Datenblock basierend auf den zweiten Daten des zweiten Datenblocks;
- Verknüpfen der ersten Datenverarbeitungsvorschrift mit der zweiten Datenverarbeitungsvorschrift, um eine dritte Datenverarbeitungsvorschrift zu erhalten, wobei bei einer Ausführung der dritten Datenverarbeitungsvorschrift die erste Datenverarbeitungsvorschrift vor der zweiten Datenverarbeitungsvorschrift ausgeführt wird;
- Verknüpfen der zweiten Datenverarbeitungsvorschrift mit der ersten Datenverarbeitungsvorschrift, um eine vierte Datenverarbeitungsvorschrift zu erhalten, wobei bei einer Ausführung der vierten Datenverarbeitungsvorschrift die erste Datenverarbeitungsvorschrift nach der zweiten Datenverarbeitungsvorschrift ausgeführt wird;
- Speichern der dritten Datenverarbeitungsvorschrift in dem zweiten Datenblock, und Speichern der vierten Datenverarbeitungsvorschrift in dem ersten Datenblock, um die Block-Chain-Struktur zu erhalten.

Bei der Blockchain-Struktur, die durch das oben beschriebene Verfahren geschaffen werden kann, kann es sich um eine Blockchain-Struktur mit zwei Einträgen handeln, dem ersten Datenblock und dem zweiten Datenblock. Ebenso kann es sich um eine Blockchain mit mehreren Datenblöcken handeln, in diesem Fall ist entweder der erste Datenblock oder der zweite Datenblock der letzte Datenblock der Blockchain-Struktur, an den zusätzlich der jeweils andere Datenblock angehängt werden soll. Beispielsweise umfasst eine solche Blockchain-Struktur 499 Einträge, wobei der erste Datenblock der 499. ist und der zweite Datenblock ein neuer Datenblock ist, der als 500. Datenblock angehängt werden soll. Ein Datenblock weist einen Informationsteil auf, in dem zu speichernde Daten gespeichert sind und er weist einen Sicherheitsteil auf, in dem Daten gespeichert sind, die der Überprüfung der Integrität der Blockchain-Struktur dienen.

Eine Datenverarbeitungsvorschrift beschreibt eine Funktion, die aus Eingangsdaten ein Ergebnis erzeugt. Die erste Datenverarbeitungsvorschrift und die zweite Datenverarbeitungsvorschrift sind demnach eine Anweisung, aus einem Dateneingang einen Datenausgang zu erzeugen.

Die erste Datenverarbeitungsvorschrift wird mit der zweiten Datenverarbeitungsvorschrift zu einer dritten Datenverarbeitungsvorschrift und zu einer vierten Datenverarbeitungsvorschrift verknüpft. Die dritte Datenverarbeitungsvorschrift wird in dem zweiten Datenblock gespeichert. Die vierte Datenverarbeitungsvorschrift wird in dem ersten Datenblock gespeichert. So wird eine bidirektional verkettete Blockchain-Struktur erhalten. Bei einer derartigen bidirektional verketteten Blockchain-Struktur kann ein Datenblock sowohl innerhalb der Blockchain-Struktur als auch an deren Ende nicht einfach manipuliert werden, ohne dass dies auffällig wird. Dadurch, dass in dem ersten Datenblock Informationen zu dem zweiten Datenblock enthalten sind und in dem zweiten Datenblock Informationen zu dem ersten Datenblock enthalten sind, kann keiner der beiden Datenblöcke aus der Blockchain entfernt werden, ohne dass dies im jeweils anderen Datenblock auffällt. Somit wird insbesondere ein letzter Datenblock der Blockchain geschützt, hier der zweite Datenblock.

Gemäß einer Ausgestaltung umfasst der Schritt des Zuordnens das Zuordnen mittels einer vorbestimmten Zuordnungsvorschrift, welche den zweiten Daten oder einer Dateneigenschaft der zweiten Daten die zweite Datenverarbeitungsvorschrift zuordnet Im Schritt des Zuordnens wird dem zweiten Datenblock basierend auf den zweiten Daten eine zweite Datenverarbeitungsvorschrift zugeordnet. Hierbei kann der Schritt des Zuordnens ein Auswerten der zweiten Daten umfassen, um die Dateneigenschaft zu erhalten. Beispielsweise wird eine Zeichenlänge der zweiten Daten oder eine Anzahl von Zeichen innerhalb der zweiten Daten ausgewertet.

Gemäß einer Ausgestaltung wird der vorbestimmten Zuordnungsvorschrift die zweite Datenverarbeitungsvorschrift zu dem zweiten Datenblock zugeordnet, wenn ein mehrmaliges Ausführen der zweiten Datenverarbeitungsvorschrift ein vordefiniertes Ergebnis lieferte.

Die Zuordnungsvorschrift kann so ausgestaltet sein, dass den zweiten Daten eine zweite Datenverarbeitungsvorschrift zugeordnet wird, die vorbestimmte charakteristische Eigenschaften aufweist. Hierbei sind diese Eigenschaften beispielsweise, dass ein Hintereinanderausführen der gleichen Funktion, d. h. ein Anwenden der Funktion auf sich selbst über mehrere Male, einen konstanten Wert ergibt. Diese Eigenschaft der Datenverarbeitungsvorschrift kann später zur Prüfung der Blockchain-Struktur als charakteristisches Merkmal und als Sicherheitsmerkmal dienen.

Gemäß einer Ausgestaltung repräsentieren die erste Datenverarbeitungsvorschrift und die zweite Datenverarbeitungsvorschrift eine mathematische Funktion, insbesondere eine analytische Funktion.

Eine mathematische Funktion kann Daten, beispielsweise Eingangswerte, auf Ausgangsdaten abbilden. Beispielsweise kann es sich hierbei um eine Listenfunktion handeln, bei der natürlichen Zahlen weitere natürliche Zahlen zugeordnet sind. Eine solche Listenfunktion umfasst für eine Blockchain-Struktur mit 500 Einträgen beispielsweise 3000 Einträge.

Gemäß einer Ausgestaltung wird im Schritt des Speicherns die erste Datenverarbeitungsvorschrift durch die vierte Datenverarbeitungsvorschrift ersetzt.

Wird der zweite Datenblock an den ersten Datenblock angehängt, so wurde der erste Datenblock bereits in einem früheren Schritt an vorhandene Datenblöcke in der Blockchain angehängt, falls der erste Datenblock nicht der Startdatenblock der Blockchain-Struktur ist. In diesem Fall weist der erste Datenblock bereits eine Datenverarbeitungsvorschrift auf, die in einem Sicherheitsteil des ersten Datenblocks gespeichert ist. Zur Verkettung, und insbesondere zur bidirektionalen Verkettung der Blockchain mit dem zweiten Datenblock wird die erste Datenverarbeitungsvorschrift aus dem ersten Datenblock von der vierten Datenverarbeitungsvorschrift überspeichert. Die vierte Datenverarbeitungsvorschrift umfasst hierbei die erste Datenverarbeitungsvorschrift und die Erweiterung gemäß dem Schritt des Verknüpfens mit der zweiten Datenverarbeitungsvorschrift.

Gemäß einer Ausgestaltung wird vor den Schritten des Verknüpfens zusätzlich der folgende Schritt durchgeführt:
- Speichern der zugeordneten zweiten Datenverarbeitungsvorschrift zu dem zweiten Datenblock.

Hierbei umfasst der Schritt des Speicherns der dritten Datenverarbeitungsvorschrift in dem zweiten Datenblock ein Ersetzen der zweiten Datenverarbeitungsvorschrift durch die dritte Datenverarbeitungsvorschrift.

Bei der Erstellung des zweiten Datenblocks kann aus dem Informationsteil des zweiten Datenblocks die zweite Datenverarbeitungsvorschrift erzeugt und in dem Sicherheitsteil gespeichert werden. Somit werden ein Informationsteil und ein Sicherheitsteil geschaffen. Um die Struktur des zweiten Datenblocks beim Verknüpfen mit der Blockchain nicht zu verändern, wird kein neuer Sicherheitsteil zum Speichern der dritten Datenverarbeitungsvorschrift geschaffen, sondern die zweite Datenverarbeitungsvorschrift im Sicherheitsteil des zweiten Datenblocks wird von der dritten Datenverarbeitungsvorschrift überschrieben.

Gemäß einer Ausgestaltung wird zusätzlich er folgenden Schritt ausgeführt:
- Auslesen der ersten Datenverarbeitungsvorschrift aus dem ersten Datenblock vor den Schritten des Verknüpfens.

Bildet der erste Datenblock beispielsweise den letzten Datenblock in einer bisher existierenden Blockchain, so ist im Sicherheitsteil des ersten Datenblocks bereits eine Datenverarbeitungsvorschrift als erste Datenverarbeitungsvorschrift gespeichert. Diese umfasst Informationen zu dem Informationsteil des ersten Datenblocks, aber auch Informationen zu einem vorhergehenden Datenblock der Blockchain-Struktur, falls dieser existiert. In diesem Fall kann die erste Datenverarbeitungsvorschrift aus dem Sicherheitsteil des ersten Datenblocks ausgelesen werden. Dies kann als Zuordnung der ersten Datenverarbeitungsvorschrift zu dem ersten Datenblock gesehen werden. Ebenso kann das Erstellen der ersten Datenverarbeitungsvorschrift zu dem ersten Datenblock als Zuordnen dienen.

Gemäß einer Ausgestaltung wird zusätzlich der folgende Schritt vor dem Schritt des Zuordnens ausgeführt:
- Erstellen eines Hash-Werts basierend auf den ersten Daten und der ersten Datenverarbeitungsvorschrift des ersten Datenblocks und Speichern des Hash-Werts zu den zweiten Daten in dem zweiten Datenblock.

Ein Vorteil des Speicherns von Hash-Werten im Informationsteil des zweiten Datenblocks, der sowohl Werte aus dem Informationsteil und dem Sicherheitsteil, d. h. aus den ersten Daten und der ersten Datenverarbeitungsvorschrift des ersten Datenblocks umfasst, kann die Sicherheit der Blockchain-Struktur weiter erhöhen. Bei dem zum oben beschriebenen Verfahren wird die Sicherheit insbesondere des letzten Datenblocks der Blockchain-Struktur erhöht. Durch das Hinzufügen von Hash-Werten, die auf den vorangehenden Datenblocks basieren, wird die Blockchain-Struktur doppelt in beide Richtungen abgesichert und die Sicherheit der ersten Datenblocks in der Blockchain erhöht.

Gemäß einer Ausgestaltung weist die zweite Datenverarbeitungsvorschrift eine Hasheigenschaft auf, wonach die zweiten Daten aus der zweite Datenverarbeitungsvorschrift nicht rekonstruierbar sind.

Die zweite Datenverarbeitungsvorschrift, die auf den zweiten Daten basiert, weist Hashwert-Eigenschaften auf. D. h., dass zwar die Zuordnung von den zweiten Daten zu der zweiten Datenverarbeitungsvorschrift eindeutig ist, jedoch aus der zweiten Datenverarbeitungsvorschrift keine Informationen auf den Inhalt der zweiten Daten mit annehmbarem Aufwand gewinnbar sind. Dies erhöht die Datensicherheit, da bei einer Weitergabe der zweiten Datenverarbeitungsvorschrift an weitere Datenblöcke keine Inhalte über die zweiten Daten ausgetauscht werden müssen.

Gemäß einem zweiten Aspekt der Erfindung wird die Aufgabe durch ein Verfahren zum Überprüfen der Integrität einer Blockchain-Struktur gelöst, welche einen ersten Datenblock mit einem zweiten Datenblock verknüpft. Hierbei weist der erste Datenblock erste Daten und wobei der zweite Datenblock zweite Daten auf. Den ersten Daten ist eine erste Datenverarbeitungsvorschrift zugeordnet und den zweiten Daten ist eine zweite Datenverarbeitungsvorschrift zugeordnet. Hierbei weist der zweite Datenblock eine Verknüpfung der ersten Datenverarbeitungsvorschrift und der zweiten Datenverarbeitungsvorschrift zu einer dritten Datenverarbeitungsvorschrift auf. Der erste Datenblock weist eine Verknüpfung der ersten Datenverarbeitungsvorschrift und der zweiten Datenverarbeitungsvorschrift zu einer vierten Datenverarbeitungsvorschrift auf. Bei einer Ausführung der dritten Datenverarbeitungsvorschrift wird die zweite Datenverarbeitungsvorschrift nach der ersten Datenverarbeitungsvorschrift ausgeführt. Bei einer Ausführung der vierten Datenverarbeitungsvorschrift wird die zweite Datenverarbeitungsvorschrift vor der ersten Datenverarbeitungsvorschrift ausgeführt. Das Verfahren weist die folgenden Merkmale auf:
- Zuordnen einer fünften Datenverarbeitungsvorschrift zu dem zweiten Datenblock basierend auf den zweiten Daten des zweiten Datenblocks und der Zuordnung der zweiten Datenverarbeitungsvorschrift zu den zweiten Daten;
- Ausführen der fünften Datenverarbeitungsvorschrift in einer vorbestimmten Reihenfolge mit der vierten Datenverarbeitungsvorschrift, um ein Ausführungsergebnis zu erhalten; und
- Bestätigen der Integrität der Block-Chain-Struktur, wenn das Ausführungsergebnis einem vorbestimmten Referenzergebnis entspricht.

Eine gemäß dem oben beschriebenen Verfahren erstellte Blockchain ist bidirektional verkettet und hat Datenverarbeitungsvorschriften in Sicherheitsteilen von den Datenblöcken gespeichert, die eindeutig bestimmt worden sind. Die Zuordnungsvorschriften, mit denen die erste Datenverarbeitungsvorschrift aus den ersten Daten und die zweite Datenverarbeitungsvorschrift aus den zweiten Daten zugeordnet wurden, sind bekannt. Aufgrund der Basis einer derartigen Zuordnung der zweiten Datenverarbeitungsvorschrift zu den zweiten Daten und basierend auf den zweiten Daten wird eine fünfte Datenverarbeitungsvorschrift erstellt. Die fünfte Datenverarbeitungsvorschrift weist hierbei bestimmte Eigenschaften auf, die unabhängig von dem Inhalt der ersten Daten oder dem Inhalt der zweiten Daten und sonstiger Verknüpfungen der ersten oder zweiten Datenverarbeitungsvorschrift mit weiteren Datenverarbeitungsvorschriften ein eindeutiges Überprüfungsergebnis herbeiführen kann.

Gemäß einer Ausgestaltung weist die zweite Datenverarbeitungsvorschrift die Eigenschaft auf, dass bei mehrmaligem Ausführen der zweiten Datenverarbeitungsvorschrift hintereinander gemäß einer vorbestimmten Anzahl Ausführungen ein konstanter Wert erzeugt wird. Im Schritt des Zuordnens einer fünften Datenverarbeitungsvorschrift wird die fünfte Datenverarbeitungsvorschrift durch mehrmaliges Ausführen der zweiten Datenverarbeitungsvorschrift hintereinander um eins weniger als die vorbestimmte Anzahl Ausführungen gebildet.

Eine Eigenschaft der zweiten Datenverarbeitungsvorschrift wird hierdurch genauer definiert. Diese Eigenschaft wird bei dem oben beschriebenen Verfahren zum Verknüpfen eines ersten Datenblocks mit einem zweiten Datenblock beispielsweise als Zuordnungsvorschrift definiert. So wird eine verhältnismäßig einfache Möglichkeit bereitgestellt, die Datenverarbeitungsvorschriften mit den gewünschten Eigenschaften zu erzeugen.

Gemäß einer Ausgestaltung wird im Schritt des Bestätigens die Integrität der Block-Chain-Struktur bestätigt, wenn das Ergebnis des Ausführens ein konstanter Wert ist.

Die Aufgabe wird gemäß einem dritten Aspekt durch ein weiteres Verfahren zum Überprüfen der Integrität einer Blockchain-Struktur gelöst. Die Blockchain-Struktur verknüpft einen ersten Datenblock mit einem zweiten Datenblock, wobei der erste Datenblock erste Daten und wobei der zweite Datenblock zweite Daten aufweist. Den ersten Daten ist eine erste Datenverarbeitungsvorschrift zugeordnet und den zweiten Daten ist eine zweite Datenverarbeitungsvorschrift zugeordnet. Der zweite Datenblock weist eine Verknüpfung der ersten Datenverarbeitungsvorschrift und der zweiten Datenverarbeitungsvorschrift zu einer dritten Datenverarbeitungsvorschrift auf. Der erste Datenblock weist eine Verknüpfung der ersten Datenverarbeitungsvorschrift und der zweiten Datenverarbeitungsvorschrift zu einer vierten Datenverarbeitungsvorschrift auf. Bei einer Ausführung der dritten Datenverarbeitungsvorschrift wird die zweite Datenverarbeitungsvorschrift nach der ersten Datenverarbeitungsvorschrift ausgeführt. Bei einer Ausführung der vierten Datenverarbeitungsvorschrift wird die zweite Datenverarbeitungsvorschrift vor der ersten Datenverarbeitungsvorschrift ausgeführt. Das Verfahren weist die folgenden Merkmale auf:
- Erneutes Zuordnen einer weiteren zweiten Datenverarbeitungsvorschrift zu dem zweiten Datenblock basierend auf den zweiten Daten des zweiten Datenblocks;
- Erneutes Zuordnen einer weiteren ersten Datenverarbeitungsvorschrift zu dem ersten Datenblock basierend auf den ersten Daten des ersten Datenblocks;
- Verknüpfen der weiteren ersten Datenverarbeitungsvorschrift mit der weiteren zweiten Datenverarbeitungsvorschrift, um eine weitere dritte Datenverarbeitungsvorschrift zu erhalten;
- Vergleichen der dritten Datenverarbeitungsvorschrift mit der weiteren dritten Datenverarbeitungsvorschrift;
- Bestätigen der Integrität der Block-Chain-Struktur, wenn das Ergebnis des Vergleichs ergibt, dass die dritte Datenverarbeitungsvorschrift mit der weiteren dritten Datenverarbeitungsvorschrift übereinstimmt.

Das erneute Berechnen der einzelnen Datenverarbeitungsvorschriften, insbesondere von jedem Datenblock der Blockchain, stellt eine weitere Möglichkeit dar, eine Blockchain-Struktur mit den beschriebenen Eigenschaften zu überprüfen.

Gemäß einem vierten Aspekt der Erfindung wird die Aufgabe durch ein Computerprogrammprodukt gelöst. Das Computer-Programm-Produkt weist Programmcode zur Ausführung wenigstens eines der oben beschriebenen Verfahren auf, wenn der Programmcode auf einem Computersystem ausgeführt wird

Gemäß einem fünften Aspekt der Erfindung wird die Aufgabe durch eine Vorrichtung zum Verknüpfen eines ersten Datenblocks mit einem zweiten Datenblock, um eine Block-Chain-Struktur zu erhalten, gelöst. Der erste Datenblock weist erste Daten sowie eine erste Datenverarbeitungsvorschrift auf. Der zweite Datenblock weist zweite Daten auf. Die Vorrichtung hat eine Speicheranordnung mit einem ersten Speicherbereich, in welchem der erste Datenblock gespeichert ist, und mit einem zweiten Speicherbereich, in welchem der zweite Datenblock gespeichert ist. Die Vorrichtung umfasst des Weiteren einen Prozessor, welcher ausgebildet ist, eine zweite Datenverarbeitungsvorschrift zu dem zweiten Datenblock basierend auf den zweiten Daten des zweiten Datenblocks zuzuordnen. Hierbei ist der Prozessor weiter dazu ausgebildet, die erste Datenverarbeitungsvorschrift mit der zweiten Datenverarbeitungsvorschrift zu verknüpfen, um eine dritte Datenverarbeitungsvorschrift zu erhalten, wobei bei einer elektronischen Ausführung der dritten Datenverarbeitungsvorschrift die erste Datenverarbeitungsvorschrift vor der zweiten Datenverarbeitungsvorschrift ausgeführt wird. Der Prozessor ist weiter dazu ausgebildet, die zweite Datenverarbeitungsvorschrift mit der ersten Datenverarbeitungsvorschrift zu verknüpfen, um eine vierte Datenverarbeitungsvorschrift zu erhalten, wobei bei einer Ausführung der vierten Datenverarbeitungsvorschrift die erste Datenverarbeitungsvorschrift nach der zweiten Datenverarbeitungsvorschrift ausgeführt wird. Der Prozessor ist dazu ausgebildet, die dritte Datenverarbeitungsvorschrift in dem zweiten Speicherbereich zu dem zweiten Datenblock zu speichern, und die vierte Datenverarbeitungsvorschrift in dem ersten Speicherbereich zu dem ersten Datenblock zu speichern, um die Block-Chain-Struktur zu erhalten.

Die Speicheranordnung kann hierbei einen oder mehrere Server umfassen, die jeweils interne oder externe Speicher, wie eine Datenbank, aufweisen. Die einzelnen Datenblöcke können auf einem einzigen Speicher, aber auch verteilt auf mehrere Speicher in unterschiedlichen Speicherbereichen liegen. Beispielsweise ist der erste Speicherbereich, in welchem der erste Datenblock gespeichert ist, in einem ersten Speicher, der zu einem ersten Server gehört. Der zweite Speicherbereich ist einem zweiten Server zugeordnet, der an einem anderen Ort angeordnet ist, und in diesem zweiten Speicherbereich ist der zweite Datenblock gespeichert. Ebenso können die beiden Datenblöcke auch in einem einzigen Speicher gespeichert werden und belegen hierbei unterschiedliche Speicherbereiche des einen Speichers.

Die Erfindung wird im Folgenden anhand von Figuren und Ausführungsbeispielen näher erläutert. In den Figuren zeigen:
- Fig. 1: eine schematische Darstellung eines Datenblocks gemäß einer Ausgestaltung der Erfindung;
- Fig. 2a: eine schematische Darstellung einer Blockchain-Struktur und eines einzelnen Datenblocks gemäß einer Ausgestaltung der Erfindung;
- Fig. 2b: die schematische Darstellung der Blockchain-Struktur gemäß Fig. 2a, wobei der einzelne Datenblock mit der Blockchain-Struktur verkettet wurde;
- Fig. 3a: eine schematische Darstellung eines Datenblocks der Blockchain-Struktur gemäß Fig. 2a und eines einzelnen Datenblocks;
- Fig. 3b: eine weitere schematische Darstellung der Blockchain-Struktur gemäß Fig. 3a, wobei der einzelne Datenblock mit der Blockchain-Struktur verkettet wurde;
- Fig. 3c: eine weitere schematische Darstellung der Blockchain-Struktur gemäß Fig. 3b;
- Fig. 4: eine graphische Darstellung einer Datenverarbeitungsvorschrift gemäß einer Ausgestaltung der Erfindung;
- Fig. 5: eine schematische Darstellung eines Flussdiagramms für ein Verfahren gemäß einer Ausgestaltung der Erfindung;
- Fig. 6: eine schematische Darstellung eines Flussdiagramms für ein Verfahren gemäß einer weiteren Ausgestaltung der Erfindung;
- Fig. 7: eine schematische Darstellung eines Flussdiagramms für ein Verfahren gemäß einer weiteren Ausgestaltung der Erfindung; und
- Fig. 8: eine schematische Darstellung einer Vorrichtung gemäß einer Ausgestaltung der Erfindung.

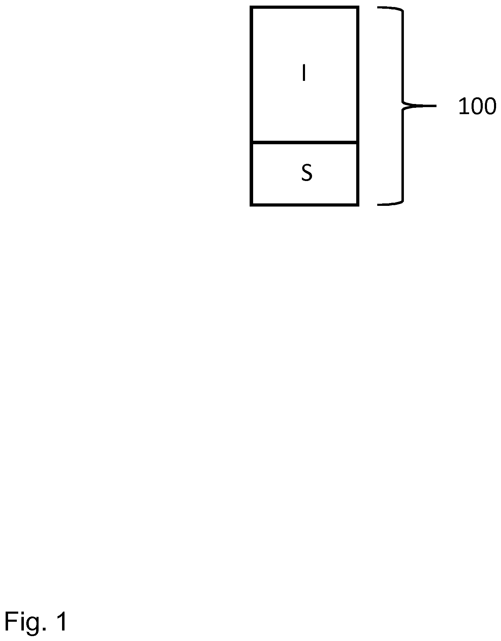

Fig. 1 zeigt eine schematische Darstellung eines Datenblocks 100. Der Datenblock 100 weist ein Informationsteil I und ein Sicherheitsteil S auf. Im Informationsteil I sind Daten gespeichert, die als Nutzdaten angesehen werden können und zu speichernde Daten umfassen. Im Sicherheitsteil S werden dagegen Daten gespeichert, die der Sicherheit des Datenblocks bzw. der Sicherheit einer Blockchain-Struktur dienen, mit der der Datenblock 100 verknüpft ist.

Der Datenblock 100 ist hierbei ein logisches Konstrukt, das in einem Speicher, wie beispielsweise einem Datenserver oder einer Datenbank, angelegt wird.

In dem Informationsteil I sind zu speichernde Informationen gespeichert. Wurde der Informationsteil I erstellt, so werden die Informationen, d.h. die Daten, in dem Informationsteil I für die Verknüpfung des Datenblocks 100 mit weiteren Datenblöcken nicht mehr verändert.

Der Sicherheitsteil S des Datenblocks 100 wird durch die Verknüpfung mit weiteren Datenblöcken angepasst. Insbesondere wird der Sicherheitsteil S bei einer Verknüpfung des Datenblocks 100 mit einem weiteren Datenblock angepasst.

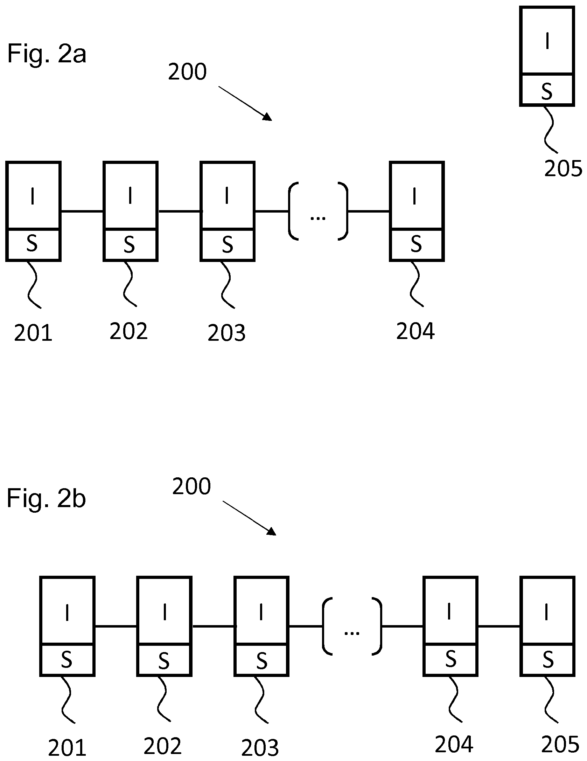

Fig. 2a zeigt eine Blockchain-Struktur 200. Die Blockchain-Struktur 200 weist eine Anzahl bereits verketteter Datenblöcke 201, 202, 203, 204 auf. Jeweils sind ein Startdatenblock 201 und folgende Datenblöcke 202, 203, 204 miteinander verkettet. Die Verkettung setzt sich im gezeigten Ausführungsbeispiel weiter fort, was durch die Klammer und die Punkte angedeutet ist. Ein letzter Block der Blockchain-Struktur 200 ist der erste Datenblock 204. Beispielsweise handelt es sich hierbei um den 499. Datenblock in der Blockchain-Struktur 200. Jeder der Datenblöcke 201 bis 204 weist einen Informationsteil I und einen Sicherheitsteil S auf. Insbesondere weist der erste Datenblock 204 einen Informationsteil I und einen Sicherheitsteil S auf.

Der Informationsteil I umfasst zu speichernde Daten, die mit dem ersten Datenblock 204 zusammen gespeichert wurden. Aus diesen ersten Daten und aus vorhergehenden Sicherheitsteilen S der Blockchain-Struktur wurde eine erste Datenverarbeitungsvorschrift a erstellt und in einem Sicherheitsteil S gespeichert. Der erste Datenblock 204 ist somit mit seinen Vorgängern der Blockchain-Struktur 200 bidirektional verkettet.

Fig. 2a zeigt des Weiteren einen zweiten Datenblock 205. Der zweite Datenblock 205 weist ebenfalls einen Informationsteil I und einen Sicherheitsteil S auf. Der zweite Datenblock 205 ist in dem in Fig. 2a dargestellten Beispiel noch nicht mit der Blockchain-Struktur 200 verknüpft.

Im Informationsteil I sind Daten gespeichert, die mit dem zweiten Datenblock 205 gespeichert und zu der Blockchain-Struktur 200 zugefügt werden sollen. Im Sicherheitsteil S ist eine zweite Datenverarbeitungsvorschrift gespeichert, die auf den gespeicherten zweiten Daten in dem Informationsteil I basiert.

Fig. 2b zeigt die Blockchain-Struktur 200 aus Fig. 2a, wobei der erste Datenblock 204 mit dem zweiten Datenblock 205 verkettet wurde. Die Blockchain-Struktur 200 umfasst nun die Datenblöcke 201 bis 204 gemäß der Darstellung aus Fig. 2a und zusätzlich den zweiten Datenblock 205.

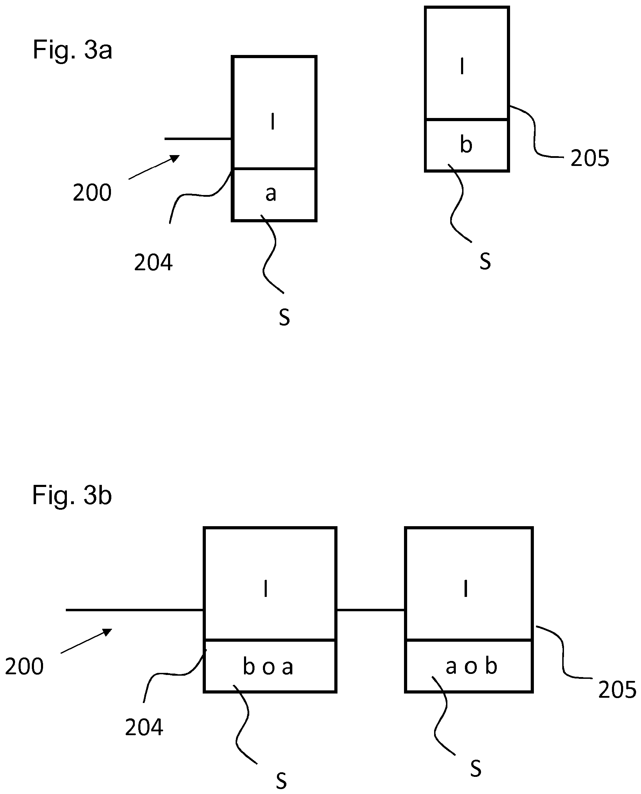

Im Folgenden wird anhand von den Fig. 3a und 3b detailliert erläutert, auf welche Art und Weise der zweite Datenblock 205 an die Blockchain-Struktur 200 angefügt wird.

Fig. 3a zeigt den ersten Datenblock 204 und den zweiten Datenblock 205 gemäß der Ausgestaltung und dem Verknüpfungszustand, wie in Fig. 2a dargestellt. D. h., der erste Datenblock 204 ist bereits Teil der Blockchain-Struktur 200 und stellt den letzten Datenblock in dieser Blockchain-Struktur 200 dar. Der zweite Datenblock 205 weist einen Informationsteil I und den Sicherheitsteil S auf. Der zweite Datenblock 205 wurde jedoch noch nicht mit der Blockchain-Struktur 200 verknüpft. Im Sicherheitsteil S des zweiten Datenblocks 205 ist eine zweite Datenverarbeitungsvorschrift B gespeichert. Im ersten Datenblock 204 ist im Sicherheitsteil S eine erste Datenverarbeitungsvorschrift A gespeichert.

Im beschriebenen Ausführungsbeispiel umfasst die erste Datenverarbeitungsvorschrift A Datenverarbeitungsvorschriften von vorangehenden Datenblöcken. Zusätzlich umfasst die erste Datenverarbeitungsvorschrift A eine Datenverarbeitungsvorschrift, die auf den ersten Daten im Informationsteil I basiert.

Die zweite Datenverarbeitungsvorschrift B im zweiten Sicherheitsteil S des zweiten Datenblocks 205 basiert auf dem Informationsteil I, insbesondere auf den dort gespeicherten ersten Daten.

Die Zuordnung der zweiten Datenverarbeitungsvorschrift B zu den ersten Daten kann anhand einer vorbestimmten Zuordnungsvorschrift erfolgen. Im gezeigten Ausführungsbeispiel umfasst die vorbestimmte Zuordnungsvorschrift ein Zuordnen der zweiten Datenverarbeitungsvorschrift B zu den zweiten Daten, basierend auf einer Vergleichsliste. Hierfür werden Dateneigenschaften, wie beispielsweise Zeichenlänge, Zeichenhäufigkeit, Zeichenanzahl oder andere auch mit Algorithmen erhaltbare Dateneigenschaften der zweiten Daten ausgewertet und basierend auf einem Auswertungsergebnis aus einer vorbestimmten Menge Funktionen die zweite Datenverarbeitungsvorschrift B ausgewählt. Die Auswahl kann zusätzlich das Hinzufügen charakteristischer Werte enthalten. In einem weiteren Ausführungsbeispiel wird die zweite Datenverarbeitungsvorschrift B nicht ausgewählt, sondern berechnet.

Fig. 3b zeigt den ersten Datenblock 204 und den zweiten Datenblock 205, die zusammen verknüpft sind und so eine Erweiterung der Blockchain-Struktur 200 ergeben. In dem ersten Datenblock 204 ist eine vierte Datenverarbeitungsvorschrift gespeichert. In dem Sicherheitsteil S des zweiten Datenblocks 205 ist eine dritte Datenverarbeitungsvorschrift gespeichert. Die dritte und die vierte Datenverarbeitungsvorschrift sind aus einer Aneinanderreihung der ersten und der zweiten Datenverarbeitungsvorschrift entstanden.

Im Sicherheitsteil S des zweiten Datenblocks werden die erste Datenverarbeitungsvorschrift A und die zweite Datenverarbeitungsvorschrift B in aufsteigender Reihe eingetragen, d. h. es wird zu einem Ausführen der dritten Datenverarbeitungsvorschrift zuerst die erste Datenverarbeitungsvorschrift A und anschließend die zweite Datenverarbeitungsvorschrift B ausgeführt.

Im Sicherheitsteil S des ersten Datenblocks 204 werden die erste Datenverarbeitungsvorschrift A und die zweite Datenverarbeitungsvorschrift B in umgekehrter Reihenfolge eingetragen, d. h. bei einer Ausführung der vierten Datenverarbeitungsvorschrift wird zuerst die zweite Datenverarbeitungsvorschrift B ausgeführt und anschließend die erste Datenverarbeitungsvorschrift A.

Auf diese Art und Weise werden der erste Datenblock 204 und der zweite Datenblock 205 bidirektional miteinander verkettet. Dies wird für jeden Datenblock der Blockchain-Struktur 200 ausgeführt.

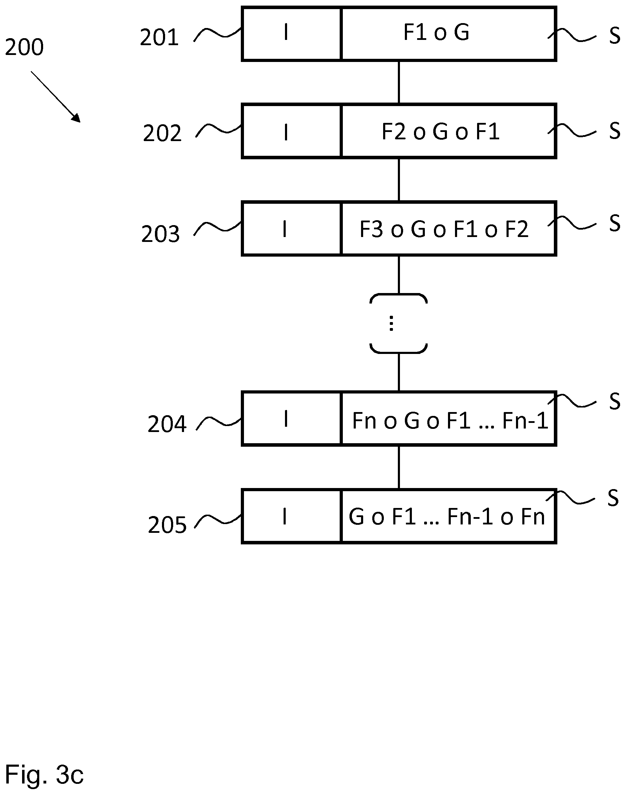

Fig. 3c zeigt die Blockchain-Struktur 200. In Figur 3c weist die Blockchain-Struktur 200 n miteinander verknüpfte Datenblöcke auf, das heißt, an den ersten Datenblock 204 wurde der zweite Datenblock 205 durch Verketten angehängt. Der zweite Datenblock 205 ist n-te Datenblock. Der erste Datenblock 204 ist (n-1)-te Datenblock. In jedem der n miteinander verknüpften Datenblöcke 201, 202, 203,... 204, 205 befinden sich zu speichernde Daten in einem Informationsteil I, wie zu dem ersten und dem zweiten Datenblock 204, 205 beschrieben. Des Weiteren weist jeder der n Datenblöcke201, 202, 203,... 204, 205 ebenso wie zu dem ersten Datenblock 204 und dem zweiten Datenblock 205 beschriebenen Sicherheitsteil S auf. In dem Sicherheitsteil S ist jeweils eine Datenverarbeitungsvorschrift gespeichert, die die miteinander benachbarten Datenblöcke miteinander verknüpft.

Im Startdatenblock 201 ist eine Startfunktion G als Datenverarbeitungsvorschrift gespeichert. Zusätzlich ist im Sicherheitsteil S des Startdatenblocks 201 eine Datenverarbeitungsvorschrift F1 gespeichert, die auf den Daten im Informationsteil I des nachfolgenden Datenblocks 202 basiert. Diese Datenverarbeitungsvorschrift F1 wird vor der Startfunktion G ausgeführt. Dies ist durch den Kreisoperator o gekennzeichnet.

Im nächsten Datenblock 202 ist die Datenverarbeitungsvorschrift F1, die auf den Daten des nächsten Datenblocks 202 basiert mit der Startfunktion G, die auf den Daten des Startdatenblocks 201 basiert verknüpft. Zusätzlich wurde diese verknüpfte Funktion (G o F1) um die Datenverarbeitungsvorschrift F2 des an den nächsten Datenblock 202 angehängten Datenblocks 203 erweitert. Der nächste Datenblock 202, der dem Startdatenblock 201 folgt, weist also die kombinierte Datenverarbeitungsvorschrift (F2 o G o F1) auf. Dieses Schema wird fortgesetzt. Der hieran anschließende Datenblock 203 weist dann die kombinierte Datenverarbeitungsvorschrift (F3 o G o F1 o F2) auf.

Der erste Datenblock 204 und der zweite Datenblock 205 bilden die letzten Datenblöcke dieser Blockchain-Struktur. Der zweite Datenblock 205 ist der n-te Datenblock. Der erste Datenblock 204 ist der (n-1)-te Datenblock.

Aufgrund der Verknüpfung aller Datenverarbeitungsvorschriften weist der zweite Datenblock 205, der als n-ter Datenblock an die Blockchain-Struktur 200 angehängt wurde, in dem Sicherheitsteil S als Datenverarbeitungsvorschrift die Funktion (G o F1 o ... o Fn) auf, wobei durch die Punkte dargestellt ist, dass die Datenverarbeitungsvorschriften fortgesetzt miteinander kombiniert werden, sodass alle Datenverarbeitungsvorschriften aller verketteter Datenblöcke miteinander zu einer Datenverarbeitungsvorschrift verkettet sind.

Der vorhergehende Datenblock, d. h. der erste Datenblock 204, weist eine Kombination der ursprünglich zum ersten Datenblock 204 gespeicherten ersten Datenverarbeitungsvorschrift (G o F1 o ... Fn-1) und zusätzlich eine Verknüpfung mit der zu dem n-ten Datenblock gehörenden zweiten Datenverarbeitungsvorschrift Fn auf. Der Sicherheitsteil S des n-1-ten Datenblocks, d. h. des ersten Datenblocks 204, lautet also (Fn o G o F1 o ... Fn-1). Auf diese Weise ist jeder Datenblock der Blockchain-Struktur 200 mit seinen Nachbarn bidirektional verkettet. Eine Manipulation oder ein Entfernen eines einzelnen Datenblocks fällt also sowohl bei allen nachfolgenden Datenblöcken als auch beim vorangehenden Datenblock auf.

Durch diese Hintereinanderreihung der Datenverarbeitungsvorschriften wird eine eindeutige Datenverarbeitungsvorschriftsreihenfolge generiert. Die Reihenfolge der einzelnen Datenverarbeitungsvorschriften ist innerhalb der kombinierten Datenverarbeitungsvorschriften eindeutig zu einem Datenblock zuordenbar. Beispielsweise ist die Reihenfolge der ersten Datenverarbeitungsvorschrift A und der zweiten Datenverarbeitungsvorschrift B innerhalb der dritten Datenverarbeitungsvorschrift eindeutig für den zweiten Datenblock 205.

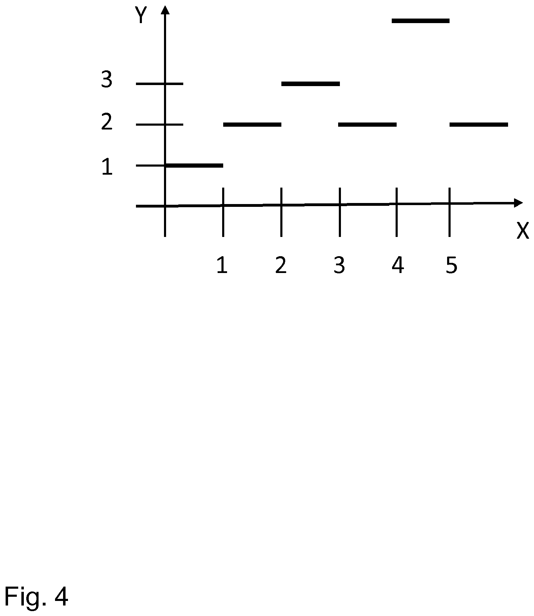

Fig. 4 zeigt eine Funktion, die als Datenverarbeitungsvorschrift gemäß dem beschriebenen Ausführungsbeispiel verwendet wird. Die Funktion hat in den Bereichen 1 bis 2, 3 bis 4, 4 bis 5, etc. den Wert 2. Die Funktion hat in den Bereichen 0 bis 1, 2 bis 3, 4 bis 5, etc. den Wert ki. ki ist hierbei eine zufällige natürliche Zahl. Die Funktion gemäß Fig. 4 hat also an vordefinierten Stellen bzw. in Wertebereichen einen konstanten Wert. In weiteren Wertbereichen hat die Funktion zufällige Einträge bzw. Einträge, die von dem Inhalt der Daten abhängen, aus denen die Funktion als Datenverarbeitungsvorschrift zugeordnet wurde.

Die Funktion, die hier als Datenverarbeitungsvorschrift verwendet wird, kann als zusätzliche Eigenschaft die Möglichkeit der Verifizierung der Funktion aus sich selbst heraus aufweisen. Beispielsweise ist für ein bekanntes k bekannt, dass die Funktion an dieser Stelle konstant ist. Dies ermöglicht eine Integritätsprüfung der Funktion aus sich heraus in Verbindung mit dem bekannten konstanten Wert k. Im beschriebenen Ausführungsbeispiel ist die in Fig. 4 dargestellte Funktion an geraden Werten konstant. Die ungeraden Bereiche variieren. Diese Eigenschaft trifft auf alle Funktionen der Blockchain-Struktur 200 zu. Im gezeigten Beispiel haben alle Datenverarbeitungsvorschriften, also auch die erste Datenverarbeitungsvorschrift A und die zweite Datenverarbeitungsvorschrift B, die konstanten Werte 2 an den geraden Stellen. Solche Funktionen haben den Vorteil, dass keine großen Strukturen notwendig sind, sie darzustellen und zu speichern.

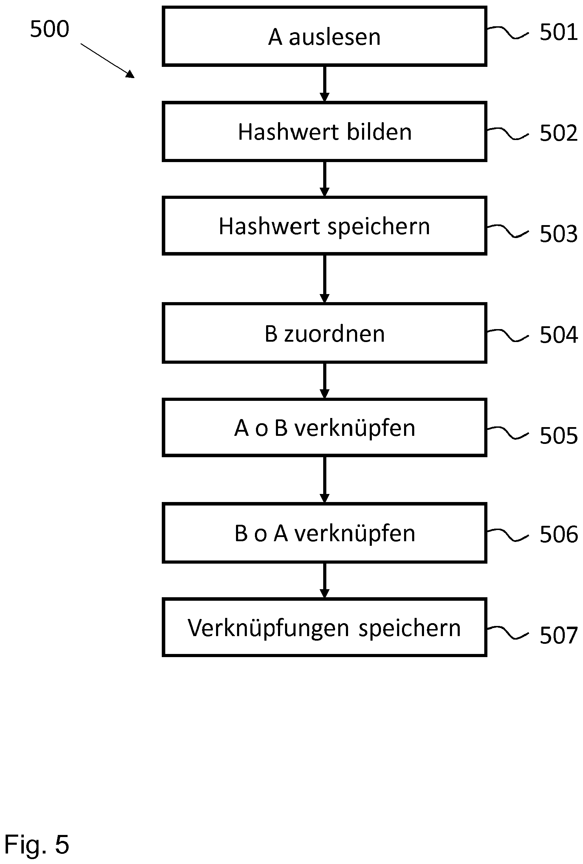

Fig. 5 zeigt eine Darstellung eines Flussdiagramms 500 für ein Verfahren gemäß einem Ausführungsbeispiel. In Schritt 501 wird die erste Datenverarbeitungsvorschrift A aus dem ersten Datenblock 204 ausgelesen. Hierfür wird auf den Sicherheitsteil S des ersten Datenblocks 204 zugegriffen und die erste Datenverarbeitungsvorschrift A ausgelesen.

Im Schritt 502 wird aus dem Datenblock 204 ein Hash-Wert gebildet. Im beschriebenen Ausführungsbeispiel umfasst die Hashwert-Bildung den gesamten Datenblock 204, d. h. den Informationsteil I und den Sicherheitsteil S. In einer weiteren Ausgestaltung kann der Hash-Wert lediglich aus dem Informationsteil I gebildet werden. Der Hash-Wert hat die Eigenschaft, dass eine Rekonstruierung der Daten, aus denen der Hash-Wert erzeugt wurde, nicht mit überschaubarem Aufwand aus dem Hash-Wert heraus möglich ist.

Im Schritt 503 wird der so erzeugte Hash-Wert in dem Informationsteil I des zweiten Datenblocks 205 gespeichert. Die Speicherung des Hash-Werts aus dem ersten Datenblock 204 in dem zweiten Datenblock 205 stellt eine erste Verknüpfung des ersten Datenblocks 204 mit dem zweiten Datenblock 205 dar. Diese Verknüpfung ist unidirektional, d. h. bei einem Entfernen des zweiten Datenblocks 205 aus der Blockchain-Struktur 200 fällt dies nicht auf.

In einem alternativen Ausführungsbeispiel kann auf die Verfahrensschritte 502 und 503 verzichtet werden, so dass kein Hash-Wert in dem Datenblock gespeichert wird.

Aus dem Informationsteil I des zweiten Datenblocks 205 wird im Schritt 504 die zweite Datenverarbeitungsvorschrift B dem zweiten Datenblock 205 zugeordnet. Die Zuordnung erfolgt hierbei basierend auf den Inhalten der zweiten Daten in dem Informationsteil I, die nach Ausführung der Schritte 502 und 503 auch den Hash-Wert umfassen.

Die Zuordnung der zweiten Datenverarbeitungsvorschrift B zu dem zweiten Datenblock 205 erfolgt anhand einer vorbestimmten Zuordnungsvorschrift. Die vorbestimmte Zuordnungsvorschrift ist im gezeigten Ausführungsbeispiel eine Auswahl aus einer Liste, basierend auf Dateneigenschaften der zweiten Daten in dem Informationsteil I des zweiten Datenblocks 205. Bei der zweiten Datenverarbeitungsvorschrift B handelt es sich wie zu Fig. 4 beschrieben, eine Listenfunktion. In weiteren Ausführungsbeispielen kann es sich auch um eine andere analytische Funktion, d. h. eine lokal konvergente Potenzreihe, wie beispielsweise eine Sinusfunktion, eine Cosinusfunktion handeln.

Die Zuordnung der zweiten Datenverarbeitungsvorschrift B in Schritt 504 umfasst, dass die zweite Datenverarbeitungsvorschrift B bestimmte Eigenschaften aufweist. Die zweite Datenverarbeitungsvorschrift B kann, wie zu Fig. 4 beschrieben, konstante Werte umfassen, die charakteristisch für den zweiten Datenblock 205 sind oder für die Blockchain-Struktur 200. Eine weitere Eigenschaft, die die zweite Datenverarbeitungsvorschrift aufweist, ist es, dass bei mehrmaligem Hintereinanderausführen der zweiten Datenverarbeitungsvorschrift B eine konstante Funktion entsteht. Diese Eigenschaft gilt für einen vorbestimmten Wert k, für den die zweite Datenverarbeitungsvorschrift hintereinander ausgeführt wird. Beispielsweise ist k 5. Dann ergibt fünfmaliges Hintereinanderausführen der zweiten Datenverarbeitungsvorschrift B einen konstanten Wert. In weiteren Ausgestaltungen kann die Anzahl der Ausführungen abweichen.

Im Schritt 505 wird die erste Datenverarbeitungsvorschrift A des ersten Datenblocks 204 mit der zweiten Datenverarbeitungsvorschrift B des zweiten Datenblocks 205 miteinander verknüpft. Hierzu werden die erste Datenverarbeitungsvorschrift A mit der zweiten Datenverarbeitungsvorschrift B zu einer dritten Datenverarbeitungsvorschrift verknüpft. Die dritte Datenverarbeitungsvorschrift umfasst die erste Datenverarbeitungsvorschrift A und die zweite Datenverarbeitungsvorschrift B. Die Verknüpfung der beiden Datenverarbeitungsvorschriften A, B hat zur Folge, dass die erste Datenverarbeitungsvorschrift A und die zweite Datenverarbeitungsvorschrift B hintereinander ausgeführt werden, wenn die dritte Datenverarbeitungsvorschrift ausgeführt wird. Als spezielle Eigenschaft hat die dritte Datenverarbeitungsvorschrift die Reihenfolge der ersten Datenverarbeitungsvorschrift A und der zweiten Datenverarbeitungsvorschrift B so festgelegt, dass bei einer Ausführung der dritten Datenverarbeitungsvorschrift die erste Datenverarbeitungsvorschrift A vor der zweiten Datenverarbeitungsvorschrift B ausgeführt wird. D. h., die beiden Datenverarbeitungsvorschriften A, B werden beim Ausführen der dritten Datenverarbeitungsvorschrift in einer ersten vorbestimmten Reihenfolge hintereinander ausgeführt.

Im Schritt 506 wird ein Verknüpfen der zweiten Datenverarbeitungsvorschrift B mit der ersten Datenverarbeitungsvorschrift A vorgenommen, um eine vierte Datenverarbeitungsvorschrift zu erhalten. Hierbei erfolgt die Verknüpfung wie im Schritt 505 beschrieben, jedoch in einer zweiten Reihenfolge, die von der ersten Reihenfolge aus dem Schritt 505 verschieden ist. Das heißt, bei einer Ausführung der vierten Datenverarbeitungsvorschrift wird zuerst die zweite Datenverarbeitungsvorschrift B ausgeführt und anschließend die erste Datenverarbeitungsvorschrift A.

Im Schritt 507 wird die dritte Datenverarbeitungsvorschrift aus Schritt 505 in dem zweiten Datenblock im Sicherheitsteil S gespeichert, wobei die im Schritt 504 zugeordnete zweite Datenverarbeitungsvorschrift, die dort gespeichert ist, überschrieben wird. Des Weiteren wird die vierte Datenverarbeitungsvorschrift in dem ersten Datenblock 204 gespeichert. Hierbei wird die vierte Datenverarbeitungsvorschrift in dem ersten Sicherheitsteil S gespeichert, wobei die erste Datenverarbeitungsvorschrift A überschrieben wird.

In einer alternativen Ausgestaltung können die Schritte 505 und 506 vertauscht sein oder zusammenfallen. In einer weiteren zusätzlichen oder alternativen Ausgestaltung kann das Speichern der dritten Datenverarbeitungsvorschrift und der vierten Datenverarbeitungsvorschrift aus Schritt 507 jeweils einzeln ausgeführt werden, so dass ein Schritt zum Speichern der dritten Datenverarbeitungsvorschrift und ein Schritt zum Speichern der vierten Datenverarbeitungsvorschrift ausgeführt wird. Die Speicherung kann ebenso nicht eine Überspeicherung der ersten Datenverarbeitungsvorschrift A und/oder der zweiten Datenverarbeitungsvorschrift B umfassen, sondern die dritte Datenverarbeitungsvorschrift und die vierte Datenverarbeitungsvorschrift können auch in einem neuen Speicherbereich gespeichert werden, wobei eine logische Zuordnung des jeweiligen Datenblocks 204 bzw. des Datenblocks 205 umdefiniert wird, so dass die Speicherbereiche einen logisch neuen Datenblock ergeben.

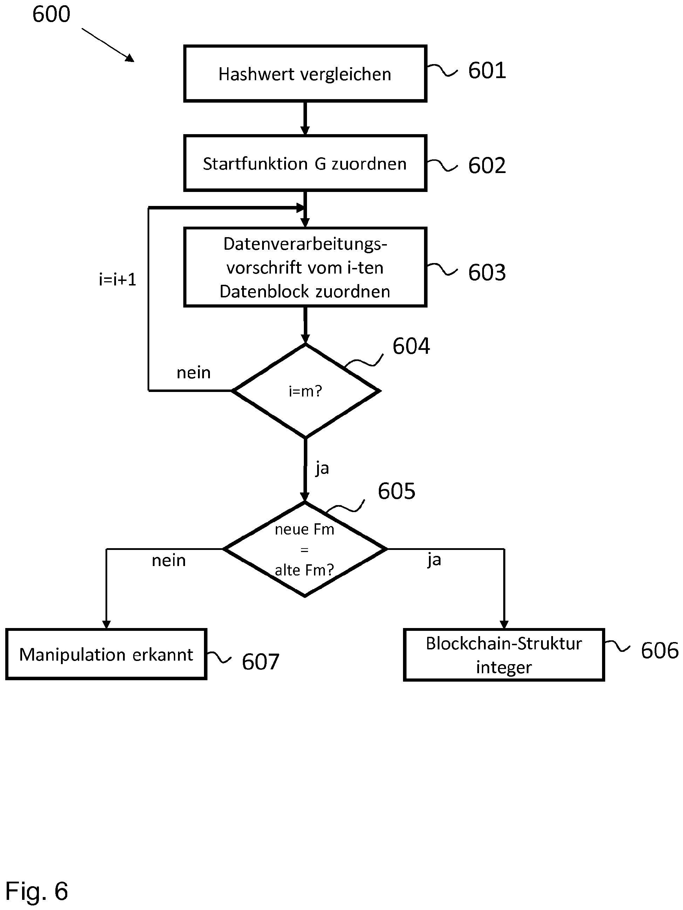

Fig. 6 zeigt ein Flussdiagramm für ein Verfahren zum Überprüfen der Integrität einer Blockchain-Struktur 200. Im beschriebenen Ausführungsbeispiel wurde die Blockchain-Struktur 200, die überprüft wird, mit dem oben z u Fig. 5 beschriebenen Verfahren erstellt und weist zur Verkettung der einzelnen Datenblöcke die oben beschriebenen Datenverarbeitungsvorschriften auf.

Im beschriebenen Ausführungsbeispiel soll die Integrität der Blockchain-Struktur 200 überprüft werden, an einem m-ten Datenblock in der Blockchain-Struktur 200.

In Schritt 601 wird aus dem (m-1)-ten Datenblock ein Hash-Wert gebildet, und der Hash-Wert, der in dem m-ten Datenblock gespeichert ist, mit dem gebildeten Hash-Wert verglichen. Sind beide Hash-Werte identisch, so ist dies ein erster Hinweis darauf, dass die Blockchain-Struktur 200 nicht manipuliert wurde.

In Schritt 602 wird zu dem Startblock 201 die Startfunktion G erneut ermittelt, wie oben beschrieben, durch eine Zuordnung aus den Daten, die im Informationsteil I des Startblocks 201 gespeichert sind.

In Schritt 603 wird zu einem Folgeblock i die Datenverarbeitungsvorschrift Fi berechnet. Der Schritt 603 wird so lange wiederholt, bis i gleich m ist. D. h., die Datenverarbeitungsvorschriften, die in den Datenblöcken angefangen vom Startblock 201 bis zu dem zu überprüfenden Datenblock an m-ter Stelle in der Blockchain-Struktur geschrieben sind, werden erneut, angefangen beim Startblock 201, berechnet.

Hierzu werden die einzelnen Datenverarbeitungsvorschriften zu dem jeweils zugehörigen Datenblock i zugeordnet und die Datenblöcke miteinander verknüpft. Das Verknüpfen und Zuordnen der Datenverarbeitungsvorschriften wird so lange wiederholt, bis die Position des m-ten Datenblocks, der überprüft werden soll, erreicht ist. Hierzu wird im Schritt 604 überprüft, ob i gleich m ist. D. h., nach der Ausführung des Schritts 602 wird der Schritt 603 m-mal wiederholt. Gemäß einem weiteren Ausführungsbeispiel wird der Schritt 602 mit dem Schritt 603 zusammengelegt, sodass als erster Schritt die Startfunktion G ermittelt wird und in den folgenden Ausführungen des kombinierten Schritts die Datenverarbeitungsvorschriften der folgenden m Datenblöcke ermittelt werden.

Nach der m-ten Wiederholung des Schritts 603, wird die so erhaltene Funktion Fm mit der Funktion Fm im Schritt 605 verglichen, die bereits in dem m-ten Datenblock gespeichert ist.

Ergibt sich bei dem Vergleich, dass die neu ermittelte Funktion Fm mit der in dem m-ten Datenblock gespeicherten Funktion Fm identisch ist, so ist der das Vergleichsergebnis positiv.

Ist der Vergleich aus Schritt 605 positiv, so wird eine positive Bestätigung im Schritt 606 ausgegeben. Die Integrität der Blockchain-Struktur 200 ist also gegeben und nicht gefährdet.

Ist hingegen jedoch der Vergleich der neu ermittelten Funktion Fm mit der in dem Sicherheitsteil S des m-ten Datenblocks gespeicherten Funktion Fm negativ, so gibt es ein Integritätsproblem in der Blockchain-Struktur 200. Hierzu wird im Schritt 607 eine entsprechende Warnmeldung ausgegeben.

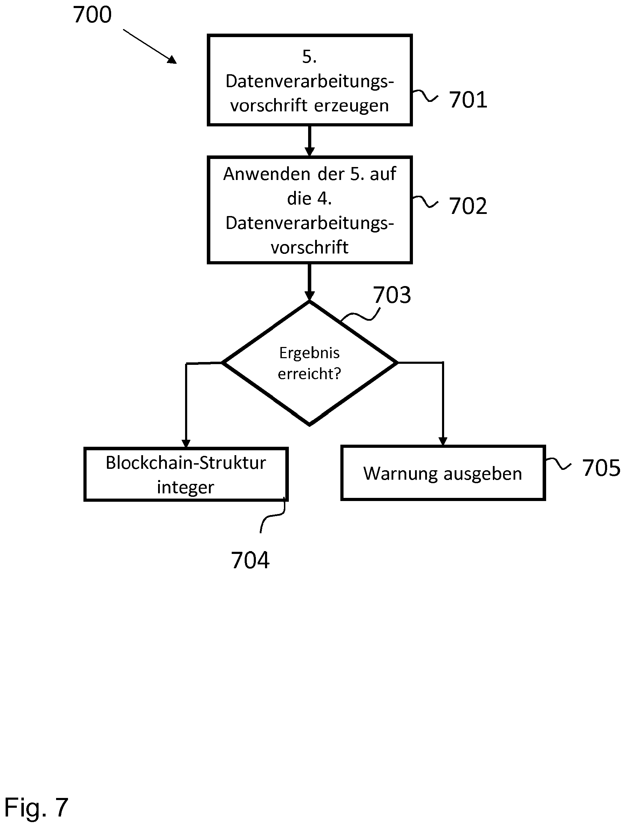

Fig. 7 zeigt ein weiteres Flussdiagramm zu einem weiteren Überprüfungsverfahren zur Überprüfung der Integrität einer Blockchain-Struktur. Wie zum Verfahren zu Fig. 6 beschrieben, betrifft dieses Verfahren eine Blockchain-Struktur 200, die beispielsweise mit dem zu Fig. 5 beschriebenen Verfahren erstellt wurde. Insbesondere weist die Blockchain-Struktur 200, die mit dem in Fig. 7 beschriebenen Verfahren überprüft wird, eine Verkettung des ersten Datenblocks 204 und des zweiten Datenblocks 205 gemäß den Verfahrensschritten 505 bis 507 gemäß Fig. 5 auf. Das zu Fig. 7 beschriebene Verfahren kann zusätzlich oder alternativ zu dem zu Fig. 6 beschriebenen Verfahren zu Überprüfung der Blockchain-Struktur verwendet werden.

Im Schritt 701 wird dem zweiten Datenblock 205 eine fünfte Datenverarbeitungsvorschrift zugeordnet. Die fünfte Datenverarbeitungsvorschrift basiert auf den zweiten Daten des zweiten Datenblocks 205, die in dem Informationsteil I gespeichert sind. Des Weiteren basiert die Zuordnung der fünften Datenverarbeitungsvorschrift auf der Zuordnung der zweiten Datenverarbeitungsvorschrift B, insbesondere der vorbestimmten Zuordnungsvorschrift, mit der die zweite Datenverarbeitungsvorschrift B erstellt wurde.

Wie oben ausgeführt, weist die zweite Datenverarbeitungsvorschrift B bestimmte Eigenschaften auf. Im Ausführungsbeispiel weist die zweite Datenverarbeitungsvorschrift B die Eigenschaft auf, dass sie bei einem k-maligen Hintereinanderausführen einen konstanten Wert ergibt. Beispielsweise wird bei fünfmaligem Hintereinanderausführen der zweiten Datenverarbeitungsvorschrift B ein konstanter Wert erzeugt. Hierbei ist die Anzahl k, für die die zweite Datenverarbeitungsvorschrift B hintereinander ausgeführt wird, vorbestimmt und bei der Erstellung der Zuordnungsvorschrift für die zweite Datenverarbeitungsvorschrift B festgelegt.

Diese Eigenschaft kann in Schritt 701 dazu verwendet werden, eine Eigenschaft der fünften Datenverarbeitungsvorschrift so zu wählen, dass eine Hintereinanderausführung der zweiten Datenverarbeitungsvorschrift B und der fünften Datenverarbeitungsvorschrift eine vorbestimmte Eigenschaft aufweist.

Im Ausführungsbeispiel wird die fünfte Datenverarbeitungsvorschrift so gewählt, dass eine Hintereinanderausführung der fünften Datenverarbeitungsvorschrift und der zweiten Datenverarbeitungsvorschrift B einen konstanten Wert ergibt. Dies kann im gewählten Ausführungsbeispiel dadurch erreicht werden, dass die fünfte Datenverarbeitungsvorschrift aus einem Hintereinanderausführen der zweiten Datenverarbeitungsvorschrift B erstellt wird, wobei die zweite Datenverarbeitungsvorschrift B einmal weniger hintereinander ausgeführt wird als nötig ist, um einen konstanten Wert zu erzeugen.

Ist beispielsweise die zweite Datenverarbeitungsvorschrift B so eingestellt, dass sie bei fünf Hintereinanderausführungen einen konstanten Wert ergibt, so kann die Zuordnung im Schritt 701 derart ausgeführt werden, dass die fünfte Datenverarbeitungsvorschrift so erstellt wird, dass die zweite Datenverarbeitungsvorschrift B k-1, d. h. viermal hintereinander ausgeführt wird.

Im Schritt 702 wird die fünfte Datenverarbeitungsvorschrift auf die vierte Datenverarbeitungsvorschrift angewendet. Die vierte Datenverarbeitungsvorschrift basiert auf der zweiten Datenverarbeitungsvorschrift B und der ersten Datenverarbeitungsvorschrift A. Hierbei wird bei der vierten Datenverarbeitungsvorschrift die zweite Datenverarbeitungsvorschrift B vor der ersten Datenverarbeitungsvorschrift A ausgeführt. Wird vor der vierten Datenverarbeitungsvorschrift die fünfte Datenverarbeitungsvorschrift ausgeführt, so wird die fünfte Datenverarbeitungsvorschrift vor der zweiten Datenverarbeitungsvorschrift B und diese vor der ersten Datenverarbeitungsvorschrift A ausgeführt. D. h., wenn die fünfte Datenverarbeitungsvorschrift das k-1-malige Ausführen der zweiten Datenverarbeitungsvorschrift B umfasst und anschließend die zweite Datenverarbeitungsvorschrift B ausgeführt wird, so wird die zweite Datenverarbeitungsvorschrift B insgesamt k-mal ausgeführt. Somit ergibt die Hintereinanderausführung der fünften Datenverarbeitungsvorschrift und der vierten Datenverarbeitungsvorschrift einen konstanten Wert. Wird zu dem konstanten Wert die erste Datenverarbeitungsvorschrift A anschließend noch ausgeführt, so verändert dies nicht die grundlegende Eigenschaft, dass ein konstanter Wert entsteht.

In Schritt 703 wird überprüft, ob das Ergebnis des Ausführens der fünften Datenverarbeitungsvorschrift vor der vierten Datenverarbeitungsvorschrift dem vorbestimmten Ergebnis entspricht. D. h. im beschriebenen Ausführungsbeispiel, dass überprüft wird, ob die Ausführung der fünften Datenverarbeitungsvorschrift vor der vierten Datenverarbeitungsvorschrift einen konstanten Wert ergibt.

Ist dies der Fall, so wird im Schritt 704 die Integrität der Blockchain-Struktur bestätigt. Eine Manipulation lag nicht vor. Ist die Überprüfung in Schritt 703 negativ, also wird kein konstanter Wert erzeugt, so wird im Verfahrensschritt 705 eine Warnung ausgegeben, dass die Integrität der Blockchain-Struktur 200 manipuliert sein könnte.

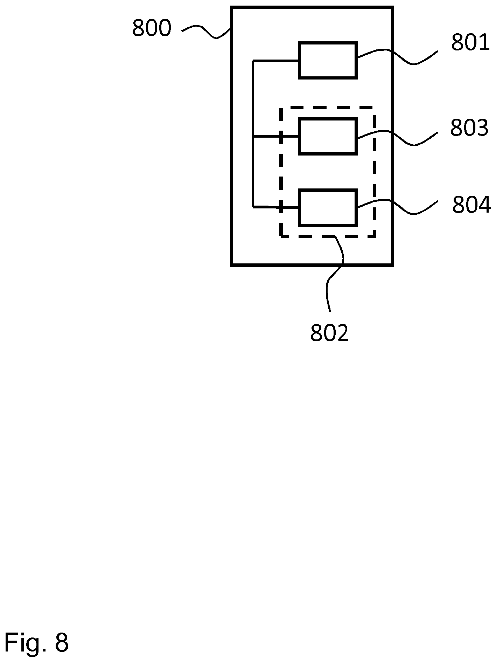

Fig. 8 zeigt eine Vorrichtung 800. Bei der Vorrichtung 800 handelt es sich im gezeigten Ausführungsbeispiel um ein Computersystem, insbesondere um ein Server-Computersystem. Zu der Vorrichtung 800 gehören ein Prozessor 801 und eine Speicheranordnung 802. Die Speicheranordnung 802 umfasst einen ersten Speicherbereich 803 und einen zweiten Speicherbereich 804. Im gezeigten Ausführungsbeispiel handelt es sich bei dem Speicherbereich 802 um eine Festplatte der Vorrichtung 800. Hierbei sind der erste Speicherbereich 803 und der zweite Speicherbereich 804 logische Bereiche in der Festplatte. In einer alternativen Ausgestaltung kann es sich bei der Speicheranordnung 802 auch um eine Mehrzahl einzelner Datenspeicher handeln, wobei die Datenspeicher eine Festplatte, ein Bandspeicherlaufwerk, flüchtige und nichtflüchtige Flash-Speicher und dergleichen umfassen können.

Der erste Speicherbereich 803 und der zweite Speicherbereich 804 können in dem gleichen Speicher an einem Ort angeordnet sein, aber auch über mehrere Orte verteilt angeordnet sein. Umfasst die Speicheranordnung 802 eine Vielzahl von Speichern, beispielsweise in einer Cloud, so können die einzelnen Speicherbereiche, insbesondere der erste Speicherbereich 803 und der zweite Speicherbereich 804, verteilt angeordnet sein. Der erste Speicherbereich 803 speichert den ersten Datenblock 204, und in dem zweiten Speicherbereich 804 ist der zweiter Datenblock 205 gespeichert. Bei dem ersten Datenblock 205 handelt es sich beispielsweise um eine Online-Transaktion, die finanzielle Daten bucht. Der erste Datenblock 204 umfasst hierbei die Transaktionsdaten und zusätzlich Sicherheitsdaten. Einen vergleichbaren Dateninhalt weist der zweite Datenblock 205 in dem zweiten Speicherbereich 804 auf. Der Prozessor 801, im beschriebenen Ausführungsbeispiel eine CPU des Servers, ist dazu eingerichtet, Daten zu verarbeiten.

Der Prozessor 801 ist dazu eingerichtet, die oben beschriebenen Verfahren durchzuführen. Der Prozessor 801 kann zum Erstellen einer Blockchain-Struktur 200 den ersten Datenblock 204 in dem ersten Speicherbereich 803 mit dem zweiten Datenblock 205 in dem zweiten Speicherbereich 804 verknüpfen. Die Verknüpfung erfolgt hierbei auf logischer Ebene und beinhaltet das Speichern von Datenverarbeitungsvorschriften zu dem jeweiligen Datenblock in dem dazugehörigen Speicherbereich.

In einem alternativen in den Figuren nicht gezeigten Ausführungsbeispiel ist der letzte Datenblock der Blockchain-Struktur der zweite Datenblock und der zusätzliche Datenblock der durch die oben beschriebene Verkettung an die Blockchain-Struktur angehängt werden soll ist der erste Datenblock. Ausgehend von dieser Vertauschung der Datenblocks ergeben sich durch Anwendung der obigen Verfahren alternative Datenverarbeitungsvorschriften, die ebenso eine bidirektionale Verkettung der einzelnen Datenblocks der Blockchain-Struktur ergeben.

### Bezugszeichenliste

- 100,202,203: Datenblock
- 200: Blockchain-Struktur
- 201: Startdatenblock
- 204: erster Datenblock
- I: Informationsteil
- S: Sicherheitsteil
- 205: zweiter Datenblock
- 500, 600, 700: Flussdiagramm
- 501-507: Verfahrensschritt
- 601-607: Verfahrensschritt
- 701-705: Verfahrensschritt
- 800: Vorrichtung
- 801: Prozessor
- 802: Speicheranordnung
- 803: erster Speicherbereich
- 804: zweiter Speicherbereich
- A: erste Datenverarbeitungsvorschrift
- B: zweite Datenverarbeitungsvorschrift
- G, F, F1, F2, F3, Fn, Fn-1: Funktion

## Patentansprüche

1. Verfahren zum Verknüpfen eines ersten Datenblocks (204) mit einem zweiten Datenblock (205), um eine Block-Chain-Struktur (200) zu erhalten, wobei der erste Datenblock (204) erste Daten aufweist, welchen eine erste Datenverarbeitungsvorschrift (A) zugeordnet ist, und wobei der zweite Datenblock (205) zweite Daten aufweist, mit:
- Zuordnen einer zweiten Datenverarbeitungsvorschrift (B) zu dem zweiten Datenblock (205) basierend auf den zweiten Daten des zweiten Datenblocks (205);
- Verknüpfen der ersten Datenverarbeitungsvorschrift (A) mit der zweiten Datenverarbeitungsvorschrift (B), um eine dritte Datenverarbeitungsvorschrift zu erhalten, wobei bei einer Ausführung der dritten Datenverarbeitungsvorschrift die erste Datenverarbeitungsvorschrift (A) vor der zweiten Datenverarbeitungsvorschrift (B) ausgeführt wird;
- Verknüpfen der zweiten Datenverarbeitungsvorschrift (B) mit der ersten Datenverarbeitungsvorschrift (A), um eine vierte Datenverarbeitungsvorschrift zu erhalten, wobei bei einer Ausführung der vierten Datenverarbeitungsvorschrift die erste Datenverarbeitungsvorschrift (A) nach der zweiten Datenverarbeitungsvorschrift (B) ausgeführt wird;
- Speichern der dritten Datenverarbeitungsvorschrift in dem zweiten Datenblock (205), und Speichern der vierten Datenverarbeitungsvorschrift in dem ersten Datenblock (204), um die Block-Chain-Struktur (200) zu erhalten.

2. Verfahren nach Anspruch 1, wobei der Schritt des Zuordnens das Zuordnen mittels einer vorbestimmten Zuordnungsvorschrift umfasst, welche den zweiten Daten oder einer Dateneigenschaft der zweiten Daten die zweite Datenverarbeitungsvorschrift (B) zuordnet.

3. Verfahren nach Anspruch 2, wobei gemäß der vorbestimmten Zuordnungsvorschrift die zweite Datenverarbeitungsvorschrift (B) zu dem zweiten Datenblock (205) zugeordnet wird, wenn ein mehrmaliges Ausführen der zweiten Datenverarbeitungsvorschrift (B) ein vordefiniertes Ergebnis lieferte.

4. Verfahren nach einem der vorhergehenden Ansprüche, wobei die erste Datenverarbeitungsvorschrift (A) und die zweite Datenverarbeitungsvorschrift (B) eine mathematische Funktion, insbesondere eine analytische Funktion repräsentieren.

5. Verfahren nach einem der vorhergehenden Ansprüche, wobei im Schritt des Speicherns die erste Datenverarbeitungsvorschrift (A) durch die vierte Datenverarbeitungsvorschrift ersetzt wird.

6. Verfahren nach einem der vorhergehenden Ansprüche, wobei vor den Schritten des Verknüpfens zusätzlich der folgende Schritt durchgeführt wird:
- Speichern der zugeordneten zweiten Datenverarbeitungsvorschrift (B) zu dem zweiten Datenblock (205),
wobei der Schritt des Speicherns der dritten Datenverarbeitungsvorschrift in dem zweiten Datenblock (205) ein Ersetzen der zweiten Datenverarbeitungsvorschrift (B) durch die dritte Datenverarbeitungsvorschrift umfasst.

7. Verfahren nach einem der vorhergehenden Ansprüche, wobei zusätzlich der folgende Schritt ausgeführt wird:
Auslesen der ersten Datenverarbeitungsvorschrift (A) aus dem ersten Datenblock (204) vor den Schritten des Verknüpfens.

8. Verfahren nach einem der vorhergehenden Ansprüche, wobei zusätzlich der folgende Schritt vor dem Schritt des Zuordnens ausgeführt wird:
- Erstellen eines Hash-Werts basierend auf den ersten Daten und der ersten Datenverarbeitungsvorschrift (A) des ersten Datenblocks (204) und Speichern des Hash-Werts zu den zweiten Daten in dem zweiten Datenblock (205).

9. Verfahren nach einem der vorhergehenden Ansprüche, die zweite Datenverarbeitungsvorschrift (B) eine Hasheigenschaft aufweist, wonach die zweiten Daten aus der zweite Datenverarbeitungsvorschrift (B) nicht rekonstruierbar sind.

10. Verfahren zum Überprüfen der Integrität einer Block-Chain-Struktur (200), welche einen ersten Datenblock (204) mit einem zweiten Datenblock (205) verknüpft, wobei der erste Datenblock (204) erste Daten und wobei der zweite Datenblock (205) zweite Daten aufweist,
wobei den ersten Daten eine erste Datenverarbeitungsvorschrift (A) zugeordnet ist und den zweiten Daten eine zweite Datenverarbeitungsvorschrift (B) zugeordnet ist,
wobei der zweite Datenblock (205) eine Verknüpfung der ersten Datenverarbeitungsvorschrift (A) und der zweiten Datenverarbeitungsvorschrift (B) zu einer dritten Datenverarbeitungsvorschrift aufweist,
wobei der erste Datenblock (204) eine Verknüpfung der ersten Datenverarbeitungsvorschrift (A) und der zweiten Datenverarbeitungsvorschrift (B) zu einer vierten Datenverarbeitungsvorschrift aufweist,
wobei bei einer Ausführung der dritten Datenverarbeitungsvorschrift die zweite Datenverarbeitungsvorschrift (B) nach der ersten Datenverarbeitungsvorschrift (A) ausgeführt wird,
wobei bei einer Ausführung der vierten Datenverarbeitungsvorschrift die zweite Datenverarbeitungsvorschrift (B) vor der ersten Datenverarbeitungsvorschrift (A) ausgeführt wird, und wobei das Verfahren die folgenden Merkmale aufweist:
- Zuordnen einer fünften Datenverarbeitungsvorschrift zu dem zweiten Datenblock (205) basierend auf den zweiten Daten des zweiten Datenblocks (205) und der Zuordnung der zweiten Datenverarbeitungsvorschrift (B) zu den zweiten Daten;
- Ausführen der fünften Datenverarbeitungsvorschrift in einer vorbestimmten Reihenfolge mit der vierten Datenverarbeitungsvorschrift, um ein Ausführungsergebnis zu erhalten; und
- Bestätigen der Integrität der Block-Chain-Struktur (200), wenn das Ausführungsergebnis einem vorbestimmten Referenzergebnis entspricht.

11. Verfahren nach Anspruch 10, wobei die zweite Datenverarbeitungsvorschrift (B) die Eigenschaft aufweist, dass bei mehrmaligem Ausführen der zweiten Datenverarbeitungsvorschrift (B) hintereinander gemäß einer vorbestimmten Anzahl Ausführungen ein konstanter Wert erzeugt wird und wobei im Schritt des Zuordnens einer fünften Datenverarbeitungsvorschrift die fünfte Datenverarbeitungsvorschrift durch mehrmaliges Ausführen der zweiten Datenverarbeitungsvorschrift (B) hintereinander um eins weniger als die vorbestimmte Anzahl Ausführungen gebildet wird.

12. Verfahren nach Anspruch 11, wobei im Schritt des Bestätigens die Integrität der Block-Chain-Struktur (200) bestätigt wird, wenn das Ergebnis des Ausführens ein konstanter Wert ist.

13. Verfahren zum Überprüfen der Integrität einer Block-Chain-Struktur (200), welche einen ersten Datenblock (204) mit einem zweiten Datenblock (205) verknüpft, wobei der erste Datenblock (204) erste Daten und wobei der zweite Datenblock (205) zweite Daten aufweist,
wobei den ersten Daten eine erste Datenverarbeitungsvorschrift (A) zugeordnet ist und den zweiten Daten eine zweite Datenverarbeitungsvorschrift (B) zugeordnet ist,
wobei der zweite Datenblock (205) eine Verknüpfung der ersten Datenverarbeitungsvorschrift (A) und der zweiten Datenverarbeitungsvorschrift (B) zu einer dritten Datenverarbeitungsvorschrift aufweist,
wobei der erste Datenblock (204) eine Verknüpfung der ersten Datenverarbeitungsvorschrift (A) und der zweiten Datenverarbeitungsvorschrift (B) zu einer vierten Datenverarbeitungsvorschrift aufweist,
wobei bei einer Ausführung der dritten Datenverarbeitungsvorschrift die zweite Datenverarbeitungsvorschrift (B) nach der ersten Datenverarbeitungsvorschrift (A) ausgeführt wird,
wobei bei einer Ausführung der vierten Datenverarbeitungsvorschrift die zweite Datenverarbeitungsvorschrift (B) vor der ersten Datenverarbeitungsvorschrift (A) ausgeführt wird, und wobei das Verfahren die folgenden Merkmale aufweist:
- Erneutes Zuordnen einer weiteren zweiten Datenverarbeitungsvorschrift (B) zu dem zweiten Datenblock (205)basierend auf den zweiten Daten des zweiten Datenblocks (205);
- Erneutes Zuordnen einer weiteren ersten Datenverarbeitungsvorschrift (A) zu dem ersten Datenblock (204) basierend auf den ersten Daten des ersten Datenblocks (204);
- Verknüpfen der weiteren ersten Datenverarbeitungsvorschrift (A) mit der weiteren zweiten Datenverarbeitungsvorschrift (B), um eine weitere dritte Datenverarbeitungsvorschrift zu erhalten;
- Vergleichen der dritten Datenverarbeitungsvorschrift mit der weiteren dritten Datenverarbeitungsvorschrift;
- Bestätigen der Integrität der Block-Chain-Struktur (200), wenn das Ergebnis des Vergleichs ergibt, dass die dritte Datenverarbeitungsvorschrift mit der weiteren dritten Datenverarbeitungsvorschrift übereinstimmt.

14. Computer-Programm-Produkt mit einem Programmcode zur Ausführung des Verfahrens nach einem der Ansprüche 1 bis 9 und/oder des Verfahrens nach einem der Ansprüche 10 bis 12 und/oder des Verfahrens nach Anspruch 13, wenn der Programmcode auf einem Computersystem ausgeführt wird.

15. Vorrichtung (800) zum Verknüpfen eines ersten Datenblocks (204) mit einem zweiten Datenblock (205), um eine Block-Chain-Struktur (200) zu erhalten, wobei der erste Datenblock (204) erste Daten aufweist sowie eine erste Datenverarbeitungsvorschrift (A) aufweist und wobei der zweite Datenblock (205) zweite Daten aufweist, mit:
einer Speicheranordnung (802) mit einem ersten Speicherbereich (803), in welchem der erste Datenblock (204) gespeichert ist, und mit einem zweiten Speicherbereich (804), in welchem der zweite Datenblock (205) gespeichert ist;
einem Prozessor (801), welcher ausgebildet ist, eine zweite Datenverarbeitungsvorschrift (B) zu dem zweiten Datenblock (205) basierend auf den zweiten Daten des zweiten Datenblocks (205) zuzuordnen;
wobei der Prozessor (801) weiter dazu ausgebildet ist, die erste Datenverarbeitungsvorschrift (A) mit der zweiten Datenverarbeitungsvorschrift (B) zu verknüpfen, um eine dritte Datenverarbeitungsvorschrift zu erhalten, wobei bei einer elektronischen Ausführung der dritten Datenverarbeitungsvorschrift die erste Datenverarbeitungsvorschrift (A) vor der zweiten Datenverarbeitungsvorschrift (B) ausgeführt wird;
wobei der Prozessor (801) weiter dazu ausgebildet ist, die zweite Datenverarbeitungsvorschrift (B) mit der ersten Datenverarbeitungsvorschrift (A) zu verknüpfen, um eine vierte Datenverarbeitungsvorschrift zu erhalten, wobei bei einer Ausführung der vierten Datenverarbeitungsvorschrift die erste Datenverarbeitungsvorschrift (A) nach der zweiten Datenverarbeitungsvorschrift (B) ausgeführt wird; und
wobei der Prozessor (801) weiter dazu ausgebildet ist, die dritte Datenverarbeitungsvorschrift in dem zweiten Speicherbereich (804) zu dem zweiten Datenblock (205) zu speichern, und die vierte Datenverarbeitungsvorschrift in dem ersten Speicherbereich (803) zu dem ersten Datenblock (204) zu speichern, um die Block-Chain-Struktur (200) zu erhalten.

## Claims

1. A method for linking a first data block (204) to a second data block (205) in order to obtain a block chain structure (200), wherein the first data block (204) comprises first data, which are assigned to a first data processing rule (A), and wherein the second data block (205) comprises second data, the method comprising:
- assigning a second data processing rule (B) to the second data block (205) based on the second data of the second data block (205);
- linking the first data processing rule (A) to the second data processing rule (B) in order to obtain a third data processing rule, wherein when the third data processing rule is executed, the first data processing rule (A) is executed before the second data processing rule (B);
- linking the second data processing rule (B) to the first data processing rule (A) in order to obtain a fourth data processing rule, wherein when the fourth data processing rule is executed, the first data processing rule (A) is executed after the second data processing rule (B);
- storing the third data processing rule in the second data block (205) and storing the fourth data processing rule in the first data block (204) in order to obtain the block chain structure (200).

2. The method according to claim 1, wherein the step of assigning comprises the assigning by means of a predetermined assignment rule, which assigns the second data processing rule (B) to the second data or to a data property of the second data.

3. The method according to claim 2, wherein the second data processing rule (B) is assigned to the second data block (205) according to the predetermined assignment rule, when executing the second data processing rule (B) several times delivered a predefined result.

4. The method according to one of the preceding claims, wherein the first data processing rule (A) and the second data processing rule (B) represent a mathematical function, in particular an analytical function.

5. The method according to one of the preceding claims, wherein in the step of storing, the first data processing rule (A) is replaced by the fourth data processing rule.

6. The method according to one of the preceding claims, wherein the following step is additionally executed before the steps of linking:
- storing the second data processing rule (B) assigned to the second data block (205), wherein the step of storing the third data processing rule in the second data block (205) comprises replacing the second data processing rule (B) with the third data processing rule.

7. The method according to one of the preceding claims, wherein the following step is additionally executed:
reading out the first data processing rule (A) from the first data block (204) before the steps of linking.

8. The method according to one of the preceding claims, wherein the following step is additionally executed before the step of assigning:
- generating a hash value based on the first data and the first data processing rule (A) of the first data block (204) and storing the hash value with the second data in the second data block (205).

9. The method according to one of the preceding claims, wherein the second data processing rule (B) comprises a hash property according to which the second data are nonreconstructable from the second data processing rule (B).

10. A method for checking the integrity of a block chain structure (200), which links a first data block (204) to a second data block (205), wherein the first data block (204) comprises first data and the second data block (205) comprises second data,
wherein the first data is assigned a first data processing rule (A) and the second data is assigned a second data processing rule (B),
wherein the second data block (205) comprises a link of the first data processing rule (A) and the second data processing rule (B) to a third data processing rule,
wherein the first data block (204) comprises a link of the first data processing rule (A) and the second data processing rule (B) to a fourth data processing rule,
wherein when the third data processing rule is executed, the second data processing rule (B) is executed after the first data processing rule (A),
wherein when the fourth data processing rule is executed, the second data processing rule (B) is executed before the first data processing rule (A), and wherein the method comprises the following features:
- assigning a fifth data processing rule to the second data block (205) based on the second data of the second data block (205) and the assignment of the second data processing rule (B) to the second data;
- executing the fifth data processing rule in a predetermined order with the fourth data processing rule in order to obtain an execution result; and
- confirming the integrity of the block chain structure (200) when the execution result corresponds to a predetermined reference result.

11. The method according to claim 10, wherein the second data processing rule (B) comprises the property that when the second data processing rule (B) is executed several times in succession according to a predetermined number of executions a constant value is generated and wherein in the step of assigning a fifth data processing rule, the fifth Data processing rule is generated by executing the second data processing rule (B) several times in succession by one times less than the predetermined number of executions.

12. The method according to claim 11, wherein in the step of confirming, the integrity of the block chain structure (200) is confirmed when the result of the execution is a constant value.

13. Method for checking the integrity of a block chain structure (200), which links a first data block (204) to a second data block (205), wherein the first data block (204) comprises first data and the second data block (205) comprises second data,
wherein the first data is assigned a first data processing rule (A) and the second data is assigned a second data processing rule (B),
wherein the second data block (205) comprises a link of the first data processing rule (A) and the second data processing rule (B) to a third data processing rule,
wherein the first data block (204) comprises a link of the first data processing rule (A) and the second data processing rule (B) to a fourth data processing rule,
wherein when the third data processing rule is executed, the second data processing rule (B) is executed after the first data processing rule (A),
wherein when the fourth data processing rule is executed, the second data processing rule (B) is executed before the first data processing rule (A), and wherein the method comprises the following features:
- reassigning of a further second data processing rule (B) to the second data block (205) based on the second data of the second data block (205);
- reassigning of a further first data processing rule (A) to the first data block (204) based on the first data of the first data block (204);
- linking the further first data processing rule (A) to the further second data processing rule (B) in order to obtain a further third data processing rule;
- comparing the third data processing rule with the further third data processing rule;
- confirming the integrity of the block chain structure (200) when the result of the comparison reveals that the third data processing rule matches the further third data processing rule.

14. A computer program product comprising a program code for executing the method according to one of claims 1 to 9 and/or the method according to one of claims 10 to 12 and/or the method according to claim 13 when the program code is executed on a computer system.

15. A device (800) for linking a first data block (204) to a second data block (205) in order to obtain a block chain structure (200), wherein the first data block (204) comprises first data and a first data processing rule (A) and wherein the second data block (205) comprises second data, the device (200) comprising:
a memory arrangement (802) comprising a first memory area (803) in which the first data block (204) is stored and comprising a second memory area (804) in which the second data block (205) is stored;
a processor (801), which is configured to assign a second data processing rule (B) to the second data block (205) based on the second data of the second data block (205);
wherein the processor (801) is further configured to link the first data processing rule (A) to the second data processing rule (B) in order to obtain a third data processing rule, wherein when the third data processing rule is electronically executed, the first data processing rule (A) is executed before the second data processing rule (B);
wherein the processor (801) is further configured to link the second data processing rule (B) to the first data processing rule (A) in order to obtain a fourth data processing rule, wherein when the fourth data processing rule is electronically executed, the first data processing rule (A) is executed after the second data processing rule (B); and
wherein the processor (801) is further configured to store the third data processing rule in the second memory area (804) with the second data block (205), and the fourth data processing rule in the first memory area (803) with the first data block (204) in order to obtain the block chain structure (200).

## Revendications

1. Procédé permettant de relier un premier bloc de données (204) à un deuxième bloc de données (205) afin d'obtenir une structure de chaîne de blocs (200), le premier bloc de données (204) présentant des premières données auxquelles est associée une première règle de traitement de données (A), et le deuxième bloc de données (205) présentant des deuxièmes données, comprenant les étapes consistant à :
- associer une deuxième règle de traitement de données (B) au deuxième bloc de données (205) sur la base des deuxièmes données du deuxième bloc de données (205) ;
- relier la première règle de traitement de données (A) à la deuxième règle de traitement de données (B) afin d'obtenir une troisième règle de traitement de données, dans lequel, lorsque la troisième règle de traitement de données est exécutée, la première règle de traitement de données (A) est exécutée avant la deuxième règle de traitement de données (B) ;
- relier la deuxième règle de traitement de données (B) à la première règle de traitement de données (A) afin d'obtenir une quatrième règle de traitement de données, dans lequel, lorsque la quatrième règle de traitement de données est exécutée, les premières règle de traitement de données (A) est exécutée après la deuxième règle de traitement de données (B) ;
- stocker la troisième règle de traitement de données dans le deuxième bloc de données (205), et stocker la quatrième règle de traitement de données dans le premier bloc de données (204) afin d'obtenir la structure de chaîne de blocs (200).

2. Procédé selon la revendication 1, dans lequel l'étape d'association comprend l'association au moyen d'une règle d'association prédéterminée qui associe la deuxième règle de traitement de données (B) aux deuxièmes données ou à une propriété de données des deuxièmes données.

3. Procédé selon la revendication 2, dans lequel, selon la règle d'association prédéterminée, la deuxième règle de traitement de données (B) est associée au deuxième bloc de données (205) si une exécution multiple de la deuxième règle de traitement de données (B) a fourni un événement prédéfini.

4. Procédé selon l'une quelconque des revendications précédentes, dans lequel la première règle de traitement de données (A) et la deuxième règle de traitement de données (B) représentent une fonction mathématique, en particulier une fonction analytique.

5. Procédé selon l'une quelconque des revendications précédentes, dans lequel à l'étape de stockage, la première règle de traitement de données (A) est remplacée par la quatrième règle de traitement de données.

6. Procédé selon l'une quelconque des revendications précédentes, dans lequel, avant les étapes d'association, l'étape suivante est exécutée en plus :
- stocker la deuxième règle de traitement de données associée (B) avec le deuxième bloc de données (205),
l'étape de stockage de la troisième règle de traitement de données dans le deuxième bloc de données (205) comprenant un remplacement de la deuxième règle de traitement de données (B) par la troisième règle de traitement de données.

7. Procédé selon l'une quelconque des revendications précédentes, dans lequel en outre l'étape suivante est exécutée :
lire la première règle de traitement de données (A) dans le premier bloc de données (204) avant les étapes de liaison.

8. Procédé selon l'une quelconque des revendications précédentes, dans lequel en outre l'étape suivante est exécutée avant l'étape d'association :
- créer une valeur de hachage sur la base des premières données et de la première règle de traitement de données (A) du premier bloc de données (204) et stocker la valeur de hachage avec les deuxièmes données dans le deuxième bloc de données (205).

9. Procédé selon l'une quelconque des revendications précédentes, dans lequel la deuxième règle de traitement de données (B) présente une propriété de hachage selon laquelle les deuxièmes données ne peuvent pas être reconstituées à partir de la deuxième règle de traitement de données (B).

10. Procédé permettant de contrôler l'intégrité d'une structure de chaîne de blocs (200) qui relie un premier bloc de données (204) à un deuxième bloc de données (205), le premier bloc de données (204) présentant des premières données, et le deuxième bloc de données (205) présentant des deuxièmes données,
une première règle de traitement de données (A) étant associée aux premières données, et une deuxième règle de traitement de données (B) étant associée aux deuxièmes données,
le deuxième bloc de données (205) présentant une liaison de la première règle de traitement de données (A) et de la deuxième règle de traitement de données (B) avec une troisième règle de traitement de données,
le premier bloc de données (204) présentant une liaison de la première règle de traitement de données (A) et de la deuxième règle de traitement de données (B) avec une quatrième règle de traitement de données,
dans lequel, lorsque la troisième règle de traitement de données est exécutée, la deuxième règle de traitement de données (B) est exécutée après la première règle de traitement de données (A),
dans lequel, lorsque la quatrième règle de traitement de données est exécutée, la deuxième règle de traitement de données (B) est exécutée avant la première règle de traitement de données (A), et le procédé présentant les particularités suivantes :
- associer une cinquième règle de traitement de données au deuxième bloc de données (205) sur la base des deuxième données du deuxième bloc de données (205) et de l'association de la deuxième règle de traitement de données (B) aux deuxièmes données ;
- exécuter la cinquième règle de traitement de données dans un ordre prédéterminé avec la quatrième règle de traitement de données afin d'obtenir un résultat d'exécution ; et
- confirmer l'intégrité de la structure de chaîne de blocs (200) si le résultat d'exécution correspond à un résultat de référence prédéterminé.

11. Procédé selon la revendication 10, dans lequel la deuxième règle de traitement de données (B) présente la propriété qu'une valeur constante est produite lorsque la deuxième règle de traitement de données (B) est exécutée successivement à plusieurs reprises selon un nombre d'exécutions prédéterminé,
et dans lequel à l'étape d'association d'une cinquième règle de traitement de données, la cinquième règle de traitement de données est formée en ce que la deuxième règle de traitement de données (B) est exécutée successivement à plusieurs reprises une fois moins souvent qu'un nombre d'exécutions prédéterminé.

12. Procédé selon la revendication 11, dans lequel à l'étape de confirmation, l'intégrité de la structure de chaîne de blocs (200) est confirmée si le résultat de l'exécution est une valeur constante.

13. Procédé permettant de contrôler l'intégrité d'une structure de chaîne de blocs (200) qui relie un premier bloc de données (204) à un deuxième bloc de données (205), le premier bloc de données (204) présentant des premières données, et le deuxième bloc de données (205) présentant des deuxièmes données,
une première règle de traitement de données (A) étant associée aux premières données, et une deuxième règle de traitement de données (B) étant associée aux deuxièmes données,
le deuxième bloc de données (205) présentant une liaison de la première règle de traitement de données (A) et de la deuxième règle de traitement de données (B) avec une troisième règle de traitement de données,
le premier bloc de données (204) présentant une liaison de la première règle de traitement de données (A) et de la deuxième règle de traitement de données (B) avec une quatrième règle de traitement de données,
dans lequel, lorsque la troisième règle de traitement de données est exécutée, la deuxième règle de traitement de données (B) est exécutée après la première règle de traitement de données (A),
dans lequel, lorsque la quatrième règle de traitement de données est exécutée, la deuxième règle de traitement de données (B) est exécutée avant la première règle de traitement de données (A), et le procédé présentant les particularités suivantes :
- réassocier une autre deuxième règle de traitement de données (B) au deuxième bloc de données (205) sur la base des deuxièmes données du deuxième bloc de données (205) ;
- réassocier une autre première règle de traitement de données (A) au premier bloc de données (204) sur la base des premières données du premier bloc de données (204) ;
- relier l'autre première règle de traitement de données (A) à l'autre deuxième règle de traitement de données (B) afin d'obtenir une autre troisième règle de traitement de données ;
- comparer la troisième règle de traitement de données avec l'autre troisième règle de traitement de données ;
- confirmer l'intégrité de la structure de chaîne de blocs (200) si le résultat de la comparaison indique que la troisième règle de traitement de données coïncide avec l'autre troisième règle de traitement de données.

14. Produit de programme informatique comprenant du code programme pour exécuter le procédé selon l'une quelconque des revendications 1 à 9 et/ou le procédé selon l'une quelconque des revendications 10 à 12 et/ou le procédé selon la revendication 13 lorsque le code programme est exécuté sur un système informatique.

15. Dispositif (800) permettant de relier un premier bloc de données (204) à un deuxième bloc de données (205) afin d'obtenir une structure de chaîne de blocs (200), le premier bloc de données (204) présentant des premières données ainsi qu'une première règle de traitement de données (A), et le deuxième bloc de données (205) présentant des deuxièmes données, comprenant :
un agencement de mémoire (802) comprenant une première zone de mémoire (803) dans laquelle est stocké le premier bloc de données (204), et une deuxième zone de mémoire (804) dans laquelle est stocké le deuxième bloc de données (205) ;
un processeur (801) qui est réalisé pour associer une deuxième règle de traitement de données (B) au deuxième bloc de données (205) sur la base des deuxièmes données du deuxième bloc de données (205) ;
le processeur (801) étant en outre réalisé pour relier la première règle de traitement de données (A) à la deuxième règle de traitement de données (B) afin d'obtenir une troisième règle de traitement de données, dans lequel lors d'une exécution électronique de la troisième règle de traitement de données, la première règle de traitement de données (A) est exécutée avant la deuxième règle de traitement de données (B) ;
le processeur (801) étant en outre réalisé pour relier la deuxième règle de traitement de données (B) à la première règle de traitement de données (A) afin d'obtenir une quatrième règle de traitement de données, dans lequel, lorsque la quatrième règle de traitement de données est exécutée, la première règle de traitement de données (A) est exécutée après la deuxième règle de traitement de données (B) ; et
le processeur (801) étant en outre réalisé pour stocker la troisième règle de traitement de données dans la deuxième zone de mémoire (804) avec le deuxième bloc de données (205), et la quatrième règle de traitement de données dans la première zone de mémoire (803) avec le premier bloc de données (204) afin d'obtenir la structure de chaîne de blocs (200).
